(19) Europäisches Patentamt
European Patent Office
Office européen des brevets

(11) Veröffentlichungsnummer : **0 047 953**
**B1**

(12) # EUROPÄISCHE PATENTSCHRIFT

(45) Veröffentlichungstag der Patentschrift : **15.08.84**

(51) Int. Cl.³ : **B 01 D 13/04**, B 01 D 31/00, B 01 D 13/00

(21) Anmeldenummer : **81107007.7**

(22) Anmeldetag : **07.09.81**

(54) **Modifizierten Polyvinylalkohol enthaltende, semipermeable Kompositmembranen, Verfahren zu ihrer Herstellung und ihre Verwendung.**

(30) Priorität : **16.09.80 CH 6925/80**

(43) Veröffentlichungstag der Anmeldung : **24.03.82 Patentblatt 82/12**

(45) Bekanntmachung des Hinweises auf die Patenterteilung : **15.08.84 Patentblatt 84/33**

(84) Benannte Vertragsstaaten : **BE CH DE FR GB IT LI NL SE**

(56) Entgegenhaltungen :
**EP-A- 0 010 425**
**EP-A- 0 025 973**
**EP-A- 0 026 399**
**DE-A- 2 505 255**
**DE-A- 2 615 954**
**FR-A- 2 131 220**
**FR-A- 2 371 477**
**US-A- 3 892 665**
**US-A- 3 945 927**

(73) Patentinhaber : **ALIGENA AG**
**Freie Strasse 103**
**CH-4051 Basel (CH)**

(72) Erfinder : **Linder, Charles, Dr.**
**20 Derech Yavneh**
**Rehovot (IL)**
Erfinder : **Perry, Mordechai, Dr.**
**32 Sokolov Street**
**Petach Tikvah (IL)**
Erfinder : **Kotraro, Reuven**
**11 Derech Yavneh**
**Rehovot (IL)**

(74) Vertreter : **Becher, Pauline, Dr. et al**
**A. Braun, Braun, Héritier, Eschmann AG Postfach 160**
**CH-4003 Basel (CH)**

**EP 0 047 953 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft semipermeable Kompositmembranen (für die Ultrafiltration und Umkehrosmose), welche aus einem porösen Träger und einem dünnen semipermeablen Oberflächenfilm bestehen, wobei dieser Film aus Polyvinylalkohol oder Copolymeren auf der Basis von Polyvinylalkohol gebildet wird, die zumindest durch ionisierbare Gruppen tragende Reste modifiziert sind.

Kompositmembranen sind aus der Literatur bekannt als dünne Filme, die sich auf einem porösen Träger befinden, der dazu dient, ihnen mechanische Festigkeit zu verleihen. Polyvinylalkohol (PVA) in nicht-vernetzter oder vernetzter Form ist als membranbildendes Material bekannt (vgl. zum Beispiel U.S. Patentschriften 3 837 500, 3 907 675 und 4 073 733).

Aus der DE-A-2 505 255 sind asymmetrische Membranen aus Polyvinylalkohol bzw. entsprechenden Copolymerisaten bekannt, die oberflächlich mit ionische Gruppen enthaltenden Verbindungen, z. B. ionischen Reaktivfarbstoffen, modifiziert sind. Eine mehrstufige Modifikation oder die Herstellung von Kompositmembranen wird nicht erwähnt.

Die bekannten trägerfreien PVA-Membranen sind für praktische Zwecke meistens zu wenig stabil und ergeben wegen ihrer Dicke nur geringe Durchflussleistungen. Eine höhere Durchflussleistung lässt sich mit dünneren Membranen erreichen ; diese weisen jedoch eine deutlich geringere mechanische Festigkeit und manchmal auch unzureichendes Rückhaltevermögen auf.

Die Kompositmembranen der US-A-3 945 927 bestehen aus einem porösen Träger und einem dünnen Membranfilm, aus z. B. Polyvinylalkohol, in den Ionenaustauschergruppen, z. B. durch Sulfonierung, eingeführt worden sind. Diese Kompositmembranen sind in Aufbau und Wirkung deutlich verschieden von den nachfolgend beschriebenen, erfindungsgemässen Kompositmembranen, deren Trennmedium aus mehreren Schichten von z. B. vernetzten Polyvinylalkohol besteht oder aus einem gegebenenfalls vernetzten Polyvinylalkoholfilm, der durch eine spezielle Folge von verschiedenen chemischen Reaktionsschritten modifiziert ist, erhalten wird.

Die Aufgabe der vorliegenden Erfindung besteht darin, verbesserte semipermeable Kompositmembranen auf PVA-Basis bereitzustellen, welche die Nachteile der bekannten PVA-Membranen weitgehend überwinden.

Es wurde nun gefunden, dass man optimale Durchfluss- und Rückhalteeigenschaften mit Kompositmembranen erzielen kann, die auf einem porösen Träger Schichten eines wie weiter unten beschrieben erhaltenen, modifizierten Polyvinylalkohols/PVA-Copolymers enthalten.

Die Membranen gemäss vorliegender Erfindung bestehen aus semipermeablen Schichten chemisch modifizierter PVA/PVA-Copolymere, die sich auf einem porösen Träger befinden. Ihre Abmessungen (Porengrössen) sind so, dass sie z. B. für niedermolekulare Salze einwertiger Ionen durchlässig sind, hingegen mehrwertige Ionen mit niedrigem und hohem Molekulargewicht oder auch hochmolekularer einwertiger Ionen oder nichtionogene Verbindungen zurückhalten.

Membranen zur umgekehrten Osmose (RO = Reserve Osmosis) sind dichte Membranen mit Porendurchmessern von 1-10 Å, welche niedermolekulare Salze, wie Natriumchlorid, wirkungsvoll zurückhalten, und zwar zu mehr als 50 % oder vorzugsweise zu über 90 %. Membranen zur Ultrafiltration (UF) haben grössere Porendurchmesser, z. B. bis 1 000 Å, und das Rückhaltevermögen für die gleichen niedermolekularen Salze beträgt weniger als 10 %. Indem diese Definitionen eher willkürlich sind, kann es Membranen mit Porendurchmessern geben, welche ein Rückhaltevermögen für Natriumchlorid von weniger als 50 % und mehr als 10 % aufweisen. Derartige Membranen werden zwischen den RO- und UF-Membranen eingestuft.

Die erfindungsgemässen Membranen können entweder als UF-Membranen und/oder als UF/RO-Zwischennmembranen betrachtet werden. Dies sind aus einer dünnen Schicht auf einem porösen Träger bestehende Kompositmembranen, deren Porendurchmesser im Durchschnitt 10 bis 1 000 Å, vorzugsweise 10 bis 500 Å beträgt, und insbesondere zwischen 10 und 120 Å oder 10 und 70 Å liegt. Die Membranen sind symmetrisch oder asymmetrisch.

Ueblicherweise wird mit RO-Membranen bei Drücken von über 30 Bar, vorzugsweise bei 80 bis 100 Bar gearbeitet. UF-Membranen funktionieren am besten bei einem Druck von unter 10 Bar und die RO/UF-Zwischenmembranen bei Drücken zwischen 10 und 30 Bar. Die Gründe für diese Arbeitsweise liegen in der Porengrösse der Membranen. Kleine Poren (RO-Membranen) bedeuten, dass dichte Membranen mit gutem Widerstand gegen eine Abnahme des Durchflussvermögens bei hohen Drücken vorliegen. Die weiter geöffneten UF-Membranen zeigen nicht die gleiche Widerstandskraft beim Einsatz von hohen Drücken. Sie würden sich verdichten und würden im Vergleich zu den ursprünglichen Membranen ein bedeutend geringeres Durchflussvermögen aufweisen.

Die erfindungsgemässen Kompositmembranen besitzen eine verbesserte mechanische Stabilität in einem weiten Druckbereich im Vergleich mit bekannten asymmetrischen UF-Membranen auf PVA-Basis.

Die erfindungsgemässen Membranen werden durch Modifikation von UF- oder RO/UF-PVA-Membranen mit einem oder einer Folge von verschiedenen chemischen Reaktionsschritten hergestellt.

Gegenstand der vorliegenden Erfindung sind somit semipermeable Kompositmembranen, die auf einer Oberfläche eines porösen Trägers einen dünnen semipermeablen Film aus Polymeren auf Basis von Polyvinylalkohol aufweisen, dadurch gekennzeichnet, dass dieser Film aus mindestens zwei Schichten Polyvinylalkohol (PVA)/Polyvinylalkoholcopolymeren (PVA-Copolymere) besteht, die mit einer

mindestens zwei funktionelle Gruppen enthaltenden Verbindung modifiziert sind.

Die mindestens zwei funktionelle Gruppen enthaltenden Verbindungen können ionische oder nichtionische Verbindungen sein.

Gegenstand der Erfindung sind ferner semipermeable Kompositmembranen, die auf einer Oberfläche eines porösen Trägers einen dünnen semipermeablen Film aufweisen, dadurch gekennzeichnet, dass dieser Film aus mindestens einer Schicht PVA/PVA-Copolymeren besteht, die gegebenenfalls mit einem Vernetzungsmittel (C''), das aus einer mindestens zwei funktionelle Gruppen und gegebenenfalls ionisierbare Gruppen enthaltenden Verbindung besteht, vernetzt sind, und der dünne Film mit den Komponenten

(a) einer mindestens zwei funktionelle Gruppen enthaltenden, monomeren organischen Verbindung,

(b) einem linearen oder verzweigten polyfunktionellen Oligomer oder Polymer und

(c) einer ionisierbare Gruppen enthaltenden, vernetzend wirkenden Verbindung umgesetzt ist.

In einer weiteren Ausführungsform wird die Reaktion mit der Komponente (c) nur durchgeführt, wenn die Komponente (b) nicht selbst schon ionisierbare Gruppen enthält. Diese Ausführungsform gilt auch im nachfolgenden immer, wenn die Komponente (c) als Reaktionskomponente erwähnt wird.

Die zuerst genannten erfindungsgemässen Kompositmembranen enthalten mindestens zwei Schichten von modifizierten PVA/PVA-Copolymeren im semipermeablen (als eigentliche Membran wirkenden) Teil der Kompositmembran. Sie werden wie angegeben modifiziert. Als Vernetzungsmittel (c'') für die einstufige Modifizierung dienen Verbindungen mit mindestens zwei funktionellen (reaktiven) Gruppen, die nicht ionisch oder ionisch (anionisch oder kationisch) sein können.

Der zweite Membrantyp wird aus gegebenenfalls (wie angegeben) modifizierten (vernetzen) PVA/PVA-Copolymermembranen erhalten, wobei zusätzlich jedoch die genannten Behandlungs-(Reaktions)schritte ((a), (b), (c)) notwendig sind ; als Vernetzungsmittel (c'') eignen sich ionische (c') ebenso aber auch nicht-ionische Verbindungen, z. B. vom Typ der Komponente (a) ; diese Modifikation kann mit Kompositmembranen ausgeführt werden, die mindestens eine vernetzte PVA/PVA-Copolymerschicht gemäss der zuerst genannten (einstufig modifizierten) Kompositmembranen enthalten.

Die Erfindung betrifft ferner (und dies ist ein weiterer Gegenstand der vorliegenden Erfindung) Verfahren zur Herstellung der obengenannten Membranen, die gute Rückhalte- und Trenneigenschaften (z. B. für hochmolekulare gegenüber niedermolekularen Stoffen ; mehrfach geladene Ionen gegenüber einwertigen Ionen) aufweisen und die gute Stabilitäten aufweisen. Ein weiterer Gegenstand der Erfindung ist die Verwendung der neuen Membranen zur Abtrennung von z. B. Salzen von organischen Verbindungen oder zur Reinigung von Abwässern.

Diese und weitere Gegenstände der vorliegenden Erfindung sind aus der nachfolgenden näheren Beschreibung ersichtlich.

Als PVA eignet sich z. B. ein Polymer hohen Molekulargewichts, das in heissem Wasser löslich ist und in dem restliche Acetatfunktionen abhydrolysiert sind. Ein kommerziell erhältliches Produkt dieser Art ist z. B. Elvanol$^R$ 72-60 (Du Pont). Andere in heissem Wasser lösliche Polyvinylalkohole höheren und niedrigeren Molekulargewichts geben ebenfalls gute Ergebnisse. Wird das Molekulargewicht durch die Viskosität einer 4 %igen Lösung bei 20 °C nach der Hoeppler-Kugelfallmethode charakterisiert, so liegt der bevorzugte Viskositätsbereich zwischen 20 und 135 mPa · s. In heissem Wasser lösliches Material wird gegenüber solchem, das in kaltem Wasser löslich ist, bevorzugt. Der Grund ist, dass nachfolgende PVA-Beschichtungen aus Lösungen bei Raumtemperatur aufgebracht werden und die Auflösung einer getrockneten Schicht durch den nächsten Guss vermieden werden kann. Diese Unlöslichkeit in kaltem Wasser wird am besten durch 98-100 %ige Hydrolyse der Acetatfunktion im PVA (PVA wird durch Acetathydrolyse aus Polyvinylacetat hergestellt) und Verwendung von Polymeren mit relativ hohem Molekulargewicht erzielt. Die Polyvinylalkohole können als isotaktische und syndiotaktische, insbesondere als ataktische (heterotaktisches) Polymere vorliegen.

Geeignete PVA-Copolymere sind z. B. solche, die weniger als 30 (10) Molprozent von Comonomeren, wie z. B. Aethylen, Vinylpyrrolidon, Vinylchlorid, Methyl(meth)acrylat, Acrylnitril und/oder Itaconsäure (einschliesslich statistischer Block- und Propfcopolymerer) sowie Derivate dieser Copolymeren (teilweise acetylierte Copolymere) enthalten.

Als Komponente (a), die das Brückenglied zwischen PVA (PVA-Copolymer) oder mit (c')/(c'') modifizierten PVA (PVA-Copolymer) und der polyfunktionellen Komponente (b) bilden, kommen monomere Verbindungen in Betracht, die vernetzende Eigenschaften besitzen und sowohl mit PVA als auch mit der Komponente (b) eine chemische Bindung eingehen können. Ihre Reaktivität verdanken diese mindestens zwei funktionelle Gruppen aufweisenden Verbindungen Mehrfachbinden, Epoxidgruppen, Aziridingruppen, Aldehydgruppen, Imidatgruppen, Isocyanat- oder Isothiocyanatgruppen, Hydroxyl-, Anhydrid-, Säurehalogenid- oder N-Methylolgruppen (diese Bindungen oder Gruppen enthalten gegebenenfalls weitere Substituenten) oder als tertiäres Amin oder vorzugsweise als Anion abspaltbaren Substituenten, die auch in Kombination vorkommen können. Als Mehrfachbindung enthalten die Verbindungen beispielsweise die Gruppierung $-CO-\underset{|}{C}=\overset{|}{\underset{\backslash}{C}}-$, $-CO-C\equiv C-$ oder $-SO_2\overset{|}{C}=\overset{|}{C}-$, die gegebenenfalls weiter substituiert sind. Auch die Isocyanat- oder Isothiocyanatgruppe kann zu diesen Gruppen gezählt werden. Als abspaltbare Gruppen kann die Komponente (a) quartäre Ammoniumgruppen, die als tertiäre Amine abgespalten werden, beispielsweise eine Trimethylammonium- oder

Pyridiniumgruppe oder auch Sulfoniumgruppen aufweisen. Als reaktionsfähige Gruppe enthält die Komponente (a) jedoch vorzugsweise Substituenten mit einem als Anion abspaltbaren Rest, vorzugsweise mit einem reaktionsfähigen Halogenatom. Derartige als Anion abspaltbare Reste verdanken ihre Reaktivität zum Beispiel dem Einfluss elektrophiler Gruppen, wie der —CO— oder —$SO_2$-Gruppe gesättigten aliphatischen Resten. Sie können ferner ihre Reaktivität auch dem Einfluss eines quartären Stickstoffatoms verdanken, wie in der Gruppe $^{+}{>}N-CH_2CH_2Cl$, oder in aromatischen Resten dem Einfluss von in o- und p-Stellung stehenden elektrophilen Gruppen, beispielsweise Nitro-, Kohlenwasserstoffsulfonyl- oder Kohlenwasserstoffcarbonylgruppen, oder aber der Bindung an ein Ringkohlenstoffatom, welches einem tertiären Ringstickstoffatom benachbart ist, wie in Halogentriazin- oder Halogenpyrimidinresten.

Als besonders vorteilhaft haben sich als Komponente (a) cyclische Kohlensäureimidhalogenide und vor allem mindestens zwei reaktionsfähige Substituenten enthaltende Halogendiazin- oder -thiazinverbungen erwiesen. Tetrachlorpyrimidin und insbesondere Cyanurchlorid haben sich dabei besonders bewährt.

Bei den hier als Komponente (a) verwendeten, cyclischen Kohlensäureimidhalogeniden handelt es sich vorteilhafterweise um

(A) s-Triazinverbindungen mit mindestens zwei an Kohlenstoffatome gebundenen gleichen oder verschiedene Halogenatomen, z. B. Cyanurchlorid, Cyanurfluorid, Cyanurbromid, sowie um primäre Kondensationsprodukte aus Cyanurfluorid bzw. Cyanurchlorid bzw. Cyanurbromid mit z. B. Wasser, Ammoniak, Aminen, Alkanolen, Alkylmercaptanen, Phenolen oder Thiophenolen ;

(B) Pyrimidine mit mindestens zwei reaktionsfähigen gleichen oder verschiedenen Halogenatome wie 2,4,6-Trichlor-, 2,4,6-Trifluor- oder 2,4,6-Tribrompyrimidin, die in 5-Stellung beispielsweise durch eine Alkyl-, Alkenyl-, Phenyl-, Carboxyl-, Cyan-, Nitro-, Chlormethyl-, Chlorvinyl-, Carbalkoxy-, Carboxymethyl-, Alkylsulfonyl-, Carbonsäureamid- oder Sulfonsäureamidgruppe, vorzugsweise jedoch durch Halogen, z. B. Chlor, Brom oder Fluor, weiter substituiert sein können. Besonders geeignete Halogenpyrimidine sind 2,4,6-Trichlor-, 2,4-Difluor-5-chlor- und 2,4,5,6-Tetrachlorpyrimidin ;

(C) Halogenpyrimidincarbonsäurehalogenide, beispielsweise Dichlorpyrimid-5- oder -6-carbonsäurechlorid ;

(D) 2,3-Dihalogen-chinoxalin-, -chinazolin- oder -phthalazin-carbonsäure- oder -sulfonsäurehalogenide, wie 2,3-Dichlorchinoxalin-6-carbonsäurechlorid bzw. -6-sulfonsäurechlorid, 2,6-Dichlorchinazolin-6- oder -7-carbonsäurechlorid und 1,4-Dichlorphthalazin-6-carbonsäurechlorid oder -bromid ;

(E) 2-Halogenbenzothiaol- oder -benzoxazolcarbonsäure- oder -sulfonsäurehalogenide, wie 2-Chlorbenzthiazol- bzw. -benzoxazol-5- oder -6-carbonsäurechlorid bzw. -5- oder -6-sulfonsäurechlorid ; sowie (F) Halogen-6-pyridazonyl-1-alkanoylhalogenide oder -1-benzoylhalogenide, z. B. 4,5-Dichlor-6-pyridazonyl-1-propionylchlorid oder -1-benzoylchlorid.

Weitere mindestens zwei reaktionsfähige Substituenten aufweisende Verbindungen, die als Komponente (a) eingesetzt werden können, sind beispielsweise

(G) Anhydride oder Halogenide aliphatischer, α,β-ungesättigter Mono- oder Dicarbonsäuren mit vorzugsweise 3 bis 5 Kohlenstoffatomen, wie Maleinsäureanhydrid, Acrylsäurechlorid, Methacrylsäurechlorid und Propionsäurechlorid ;

(H) Anhydride oder Halogenide von bewegliche Halogenatome enthaltenden, aliphatischen Mono- oder Dicarbonsäuren mit vorzugsweise 3 bis 10 Kohlenstoffatomen oder aromatischen Carbonsäuren, beispielsweise Chloracetylchlorid, β-Chlorpropionylchlorid, α,β-Dibrompropionylchlorid, α-Chlor- oder β-Chloracrylsäurechlorid, Chlormaleinsäureanhydrid und β-Chlorcrotonsäurechlorid bzw. Fluor-nitro- oder Chlornitrobenzoesäurehalogenide oder -sulfonsäurehalogenide, in welchen das Fluor- bzw. Chloratom in o- und/oder p-Stellung zur Nitrogruppe steht ;

(I) Carbonsäure-N-methylolamide oder reaktionsfähige funktionelle Derivate dieser Methylolverbindungen. Als Carbonsäure-N-methylolamide kommen vor allem N-Methylolchloracetamid, N-Methylolbromacetamid, N-Methylol-α,β-dichlor- oder -dibrompropionamid, N-Methylolacrylamid und N-Methylol-α-chlor- oder -α-bromacrylamid in Betracht. Als reaktionsfähige Derivate der Carbonsäure-N-methylolamide kommen beispielsweise die entsprechenden N-Chlormethyl- oder N-Brommethylamide infrage ;

(J) Gegebenenfalls verätherte N-Methylolharnstoffe oder N-Methylolmelamine, beispielsweise N,N-Dimethylolharnstoff, N,N-Dimethylolharnstoffdimethyläther, N,N'-Dimethyloläthylen- oder -propylenharnstoff, 4,5-Dihydroxy-N,N'-dimethyloläthylenharnstoff oder 4,5-Dihydroxy-N,N'-dimethyloläthylenharnstoffdimethyläther bzw. Di- bis Hexamethylolmelamin, Trimethylolmelamindimethyläther, Pentamethylolmelamin-di- oder -trimethyläther und Hexamethylolmelamin-pentamethyl- oder -hexamethyläther ;

(K) Kondensationsprodukte von mindestens eine phenolische Hydroxylgruppe aufweisenden Diarylalkanen mit Halogenhydrinen, z. B. das Diepoxid aus 2,2-Bis-(4'-hydroxyphenyl)-propan und Epichlorhydrin, sowie Glyzerin-triglycidyläther und ferner entsprechende Diaziridine ;

(L) Dialdehyde, beispielsweise Glutaraldehyd oder Adipinaldehyd ;

(M) Diisocyanate oder Diisothiocyanate, wie $C_2$-$C_4$-Alkylendiisocyanate, z. B. Aethylendiisocyanat,

gegebenenfalls $C_2$-$C_4$-alkylsubstituierte Phenylendiisocyanate, z. B. Phenylen-1,4-diisocyanat oder Toluylen-2,4-diisocyanat, oder Phenylen-diisothiocyanate, z. B. Phenylen-1,4-diisothiocyanat ;

(N) Weitere reaktionsfähige Verbindungen wie Trisacrylolylhexahydro-s-triazin.

Die als Komponente (b) verwendeten Verbindungen sind in der Regel polyfunktionelle Oligomere oder Polymere, welche aliphatische oder aromatische Aminogruppen enthalten, wobei diese primär, sekundär, oder tertiär sein können ; ferner können diese polyfunktionellen Verbindungen Hydroxyl-, Thiol-, Isocyanat- oder Thioisocyanatgruppen aufweisen.

Beispiele für solche Polymere sind Polyäthylenimin (Molekulargewicht 150 bis 1 000 000), das teilweise (mit Methyljodid) alkyliert oder anderweitig modifiziert sein kann, Polyvinylamin (Molekulargewicht 1 000 bis 2 000 000), Polyvinylalkohol (Molekulargewicht 2 000 bis 200 000) oder teilweise veresterter Polyvinylalkohol, Cellulosederivate wie Aethylcellulose, Carboxymethylcellulose, Hydroxymethylcellulose und Hydroxyäthycellulose, ferner Polyvinylanilin (Molekulargewicht 200 bis 2 000 000), Polybenzylamine, Polyvinylmercaptan, Polymere aus 2-Hydroxyäthyl- oder 2-Aminoäthylmethacrylaten, Co-, Block- oder Propfpolymere aus diesen Monomeren und/oder Polymeren sowie weiteren Monomeren und/oder Polymeren, insbesondere solchen, die ionische Gruppen ($—SO_3^{\ominus}$, $—COO^{\ominus}$, $—^{\oplus}NR_4$) enthalten. Beispiele hierfür sind die Copolymeren aus Styrolsulfonat (Natriumsalz)/Vinylanilin, 2-Aminoäthylmethacrylat/acrylsäure, Vinylanilin/Vinylbenzyltrimethylammoniumchlorid oder Vinylamin/Vinylsulfonat.

Als Komponenten (b) werden wasserlösliche — und weniger bevorzugt wasserunlösliche — Verbindungen wie z. B. Polyvinylalkohole, Cellulosederivate, Polyvinylamine, Polyvinylaniline und vorzugsweise Polyäthylenimine sowie die zuvor erwähnten Beispiele für Copolymere eingesetzt.

Bei den Komponenten (a) und (b) in der oben angeführten Liste ist nicht zu erwarten, dass jede Verbindung bzw. jeder Rest (a) mit jedem oligomeren oder Polymeren unter (b) reagieren wird. Beispielsweise sind alkylaminhaltige funktionelle Gruppen der Verbindung (b) im allgemeinen reaktionsfähiger mit den Komponenten (a) als aromatische Amine oder Hydroxylgruppen enthaltende Verbindungen. Ebenso werden polymeres oder oligomeres Isocyanat oder Thioisocyanat als Komponente (b) nicht mit gleichartigen Gruppen der Komponente (a) reagieren, sondern es sollten solche Komponente (a) gewählt werden, mit denen eine Reaktion möglich ist (z. B. Verbindungen (a), die Methylol-, Amin oder Hydroxylgruppen enthalten, werden mit Isocyanatfunktionen in der Komponente (b) reagieren).

Die ionisierbaren Gruppen sind entweder bereits an das polyfunktionelle Oligomer oder Polymer (b) gebunden oder sie werden durch die Komponente (c) oder (c') (bei einstufiger Modifikation) oder durch (b) und (c) eingeführt, wobei (c) mindestens eine (vorzugsweise mindestens zwei) reaktionsfähige Gruppe (n) und (c') mindestens zwei solche enthält. Die ionisierbare (anionische oder Kationische) Gruppe ist kovalent gebunden, und das Gegenion ist beweglich und austauschbar. Unter einer anionisch gebundenen Gruppe ist eine solche zu verstehen, bei der das negative Ion an das Molekül der Membran gebunden ist und das Gegenion beweglich und austauschbar ist. Bei der kationisch ionisierbaren Gruppe ist der Sachverhalt umgekehrt.

Die Gegenionen der ionisierbaren Gruppen können ein wichtiger Faktor in der Bestimmung des Durchflusses bzw. des Rückhaltvermögens der fertigen Membran sein. Beispielsweise führten Kaliumgegenionen in Membranen zu höheren Durchflussleistungen bei gleichwertigem Rückhaltevermögen verglichen mit Membranen, in denen Natriumgegenionen vorlagen.

Geeignete Reagenzien (c) bzw. (c') zur Einführung von ionisierbare Gruppe enthaltenden Resten in die unmodifizierten (oder durch eine Folge von Reaktionsschritten vormodifizierten) PVA/PVA-Copolymer-Membrane können farblos oder vorzugsweise farbig sein.

Die eine ionisierbare Gruppe enthaltenden Reagenzien können farblose oder farbige Verbindungen sein, beispielsweise ionogene Reaktivfarbstoffe, die verschiedenen Klassen angehören können, zum Beispiel Anthrachinon-, Formazan- oder vorzugsweise Azofarbstoffe, welche gegebenenfalls auch als Metallkomplexe vorliegen können. Als Reaktivgruppen, welche die Bindung dieser Farbstoffe bzw. farblosen (z. B. Chrom-, Kupfer- oder Kobaltkomplexe) Reagenzien an die polymeren (modifizierten) Membransubstanzen ermöglichen, seien die folgenden genannt : Carbonsäurehalogenidgruppen, Sulfonsäurehalogenidgruppen, Reste von α,β-ungesättigten Carbonsäuren bzw. Amiden, z. B. der Acryl-, Methacryl-, α-Chloracryl- oder α-Bromacrylsäure, bzw. Reste von vorzugsweise niedrigen Halogenalkylcarbonsäure, z. B. der Chloressigsäure, α,β-Dichlorpropionsäure oder α,β-Dibrompropionsäure ; Reste von Fluorcyclobutancarbonsäuren, z. B. Tri- oder Tetrafluorcyclobutancarbonsäure ; Reste mit Vinylacylgruppen, z. B. Vinylsulfongruppen oder Carboxyvinylgruppen ; Reste mit Aethylsulfonyl- ($—SO_2CH_2CH_2OSO_2OH$, $—SO_2CH_2Cl$) oder Aethylaminosulfonylgruppen ($—SO_2NHCH_2CH_2OSO_2OH$) sowie halogenierte heterocyclische Reste wie Dihalogenchinoxaline, Dihalogenpyridazonyl, Dihalogenphthalazine, Halogenbenzthiazole und vorzugsweise halogenierte Pyrimidine oder 1,3,5-Triazine wie Monohalogentriazine, Dihalogentriazine, 2,4-Dihalogenpyrimidine, 2,4,5- oder 2,4,6-Trihalogenpyrimidine. Geeignete Halogenatome sind Fluor-, Brom- und insbesondere Chloratome.

In der Komponente (c) bzw. (c') vorliegende Reaktivgruppen sind beispielsweise Monochlortriazinyl, Dichlortriazinyl, 2,4-Dichlorpyrimidinyl, 2,3-Dichlorchinoxalin-6-carbonyl, 4,5-Dichlorpyridazonylpropionyl, 1,4-Dichlorphthalazin-6-carbonyl, an den Farbstoff über —CONH—, $SO_2NH$—, —NHAr—N = N— (Ar = Phenylen oder Naphthylen) gebundenes Chlorbenzthiazol, 5-Chlor-4-methyl-2-methylsulfonylpyrimidinyl, Vinylsulfonyl, α-Sulfatoäthylsulfonyl, β-Sulfatoäthylaminosulfonyl, β-Chloräthylsulfonyl oder β-Sulfatopropionamido.

Ganz besonders bevorzugte Komponenten (c) bzw. (c') sind Rektivfarbstoffe (Azofarbstoffe), welche Sulfonsäure- (—$SO_3H$) oder Carboxylgruppen (—COOH) (wobei diese beiden Gruppen auch in Salzform, z. B. als Alkalisalz (Natriumsalz), vorliegen können) und als Reaktivgruppen Monochlortriazinyl-, Dichlortriazinyl-, 2,4-Dichlorpyrimidinyl-, 2,3-Dichlorchinoxalin-6-carbonyl-, Vinylsulfonyl-, β-Sulfatoäthylsulfonyl-, β-Chloräthylsulfonyl- oder β-Sulfatoäthylaminosulfonylreste enthalten.

Die Vernetzungsmittel (c") sind solche wie sie für (c') (mit mindestens zwei funktionellen Gruppen) genannt sind ; ferner eignen sich aber auch nichtionische Verbindungen, die die gleichen Voraussetzungen bezüglich ihrer Reaktivität erfüllen, beispielsweise Verbindungen der Komponente (a).

Die Vernetzung kann durch Ausbildung chemischer Bindungen, durch elektrostatische Kräfte zwischen ionischen Gruppen und durch Komplexbildungen zwischen Metallen und funktionellen Gruppen in Polymeren erfolgen. Bevorzugt ist zwar die Vernetzung durch Ausbildung kovalenter Bindungen, doch kommen auch die anderen Möglichkeiten infrage, wobei in einigen Fällen auch alle drei der genannten Möglichkeiten gleichzeitig die Vernetzung bewirken können.

Als ionisierbare Gruppen können die membranmodifizierenden Substanzen (bzw. die nach der Modifizierung erhaltenen Membranen) z. B. Sulfatogruppen, Sulfonsäuregruppen, Carbonsäuregruppen, von primären, sekundären oder tertiären Aminogruppen und Wasserstoff gebildete Ammoniumgruppen oder quartäre Ammoniumgruppen sowie Phosphonium- oder Sulfoniumgruppen enthalten. Besonders günstige Ergebnisse werden mit sulfonsäuregruppenhaltigen Verbindungen erzielt.

Besonders wertvoll und vielseitig anwendbar sind die Membranen, die zumindest an der Membranoberfläche ein durch einen sulfonsäuregruppenhaltigen Azofarbstoff modifiziertes Oligomer oder Polymer (b) enthalten. Der Azofarbstoff kann auch komplexgebundenes Metall, insbesondere Kupfer, enthalten.

Ferner ist es auch möglich, die geladenen Gruppen durch Umsatz von Reagenzien, wie Alkyl- oder Benzylhalogeniden, mit einer Aminogruppe der Polymerkette (Komponente (b)) in die Membran einzuführen. Auf diese Weise kann z. B. der Polyäthyleniminrest mit Methyljodid oder Dimethylsulfat modifiziert werden. Andererseits kann auch mit Chlorsulfonsäure selbst modifiziert werden.

Die Herstellung des erfindungsgemäss verwendeten, modifizierten Polyvinylalkohols erfolgt in der Regel mit wässrigen 2,5 bis 10 Gew.-%igen PVA-Lösungen.

Bevorzugt werden Konzentrationen von 2,5 bis 5 Gew.-%, wobei sich Konzentrationen von etwa 5 % als ganz besonders zweckmässig erwiesen haben. Die Viskosität einer solchen Lösung beträgt etwa 55 bis 65 mk.s (4 Gew.-%ige Lösung bei 20 °C, Hoeppler-Kugelfallmethode).

Die (gereinigten) Komponenten (c')/(c") werden in Form einer wässrigen Lösung bei Temperaturen von etwa 40 bis 90 °C diesen PVA-Lösungen zugesetzt. Vor dem Giessen auf einen porösen Träger filtriert man die PVA-Lösungen in der Regel durch ein Submikronfilter, um Staubteilchen zu beseitigen. Die Komponenten (c')/(c"), z. B. der reaktive Farbstoff, können durch die üblichen Reinigungs- und Extraktionsstufen gereinigt werden, um z. B. überschüssige Salze zu entfernen.

Der poröse Träger dient dazu, einer mechanisch schwachen Membran, welche die Durchfluss- und Rückhalteeigenschaften des Kompositsystems reguliert, mechanische Festigkeit zu verleihen. Geeignete Trägerstoffe sind wasserunlöslich, und man kann diese unter Polyacrylnitrilen, Polysulfonen, Polyamiden, Polyolefinen wie Polyäthylenen oder Polypropylenen, oder cellulosehaltigen Stoffen auswählen. Die Porengrösse des Trägers sollte nicht zu gross sein, um ein zu rasches Eindringen der Giesslösung in seine Poren zu vermeiden, da dann nur Membranen mit verhältnismässig niedriger Durchflussleistung erhalten werden.

In solchen Fällen kann man zuerst eine Verbindung (z. B. Paraffinöle, Siliconöle, Mineralöle oder Chloroform) in die Poren einbauen, die die Poren schützt, und anschliessend die PVA(Copolymer)-Lösung auf dieses Substrat giessen. Danach wird diese Verbindung durch ein Lösungsmittel aus den Poren wieder entfernt. Die verwendeten Lösungsmittel sollten PVA bzw. PVA/Copolymere nicht lösen.

Das Verfahren zur Herstellung der erfindungsgemässen Kompositmembranen mit mindestens zwei Schichten ist dadurch gekennzeichnet, dass man eine wässrige Giesslösung, die Verbindungen mit mindestens zwei funktionellen (reaktiven) Gruppierungen und PVA/PVA-Copolymere enthält, auf eine Oberfläche eines porösen Trägers giesst, während des Giessens einen Warmluftstrom über den Träger leitet, das Wasser verdampft, die Beschichtung trocknet, diese Schritte mindestens einmal wiederholt und die Membran mit einer wässrig-alkalischen Lösung behandelt.

Die Konzentration der Poymergiesslösung und die Verdampfungstemperatur wählt man so, dass die Beschichtungspolymeren nur zu einem Mindestmass in den Träger eindringen, was Membranen mit hohen Durchflussleistungen ergibt. Poröse Träger mit verstopften Poren können die Lösungsmittelströmung behindern und benötigen deshalb höhere Drücke, um geeignete Durchflussleistungen zu erzielen. Durchschnittliche porengrössen für die Träger liegen zwischen 0,05 und 0,3 µm und Polypropylenmaterial einheitlicher Porengrösse (Celgard® 3501-Celanese) mit rechteckigen Porenabmessungen von 0,04 bis 0,2 µm wird als Träger bevorzugt.

Nach dem Giessen der PVA (PVA-Copolymer) Farbstofflösung verdampft man das Wasser, um eine trockene Membran zu bilden. Ist die Verdampfungsgeschwindigkeit zu niedrig, so wird Lösung in den porösen Träger eindringen oder eine bereits getrocknete Schicht teilweise auflösen. In beiden Fällen wird das erhaltene Verbundmaterial verhältnismässig niedriges Durchfluss- und Rückhaltevermögen aufweisen. Eine hohe Verdampfungsgeschwindigkeit lässt sich dadurch erreichen, dass man 70° bis 150°, vorzugsweise 70° bis 110 °C und insbesondere 80° bis 90 °C heisse Luft unmittelbar nach dem Giessen einer gegebenen Schicht über und auf die Membran bläst. Auf diese Weise erzielt man optimale Ergebnisse. Trocknen (bei etwa 70° bis 90 °C) erfordert weniger als eine Sekunde, und eine weitere Schicht kann unmittelbar danach gegossen werden.

Die Dicke einer einzelnen nassen Schicht soll im Bereich von 2 bis 15 µm liegen, was nach dem Trocknen 0,2 bis 2 µm ergibt. Die Nassdicke wird durch die Konzentration der Lösung und die für rasche Verdampfung ind minimale Porendurchdringungen erforderliche Trocknungsgeschwindigkeit bestimmt. Es wurde gefunden, dass man mit einem Glasstab, der auf dem porösen Träger aufliegt und von hinten durch einen Anteil Giesslösung gezogen wird und diese ausbreitet, gute Ergebnisse erzielt. Aehnliche Ergebnisse erhält man beim Giessen aufeinanderfolgender Schichten durch Rakel, Tiefdruckrollen (-zylindern), Luftrakeln oder Meniskusscheiben.

Die Anzahl gegossener Schichten bestimmt die Durchfluss/Rückhalteeigenschaften der fertigen Kompositmembranen. Bei einer nur einstufigen Modifizierung (PVA/PVA-Copolymer + (c') oder (c")) sollte man zur Bildung des halbdurchlässigen Films mindestens zwei Schichten anwenden. Werden zu wenig Schichten übereinander gegeossen, so ergibt sich ein niedriges Rückhaltevermögen und ein gleichzeitig hohes Durchflussvermögen. Werden zu viele Schichten gegossen, so ist das Rückhaltevermögen hoch, das Durchflussvermögen jedoch niedrig. Die optimale Schichtenzahl ist natürlich eine Funktion der Dicke jeder Schicht, welche ihrerseits von der Konzentration der Lösung und der Nassfilmdicke abhängt. Sehr dünne Schichten erfordern eine grössere Anzahl von Ueberzügen als dickere. Es wurde gefunden, dass 4 bis 6 mit einem Glasstab aus 5 Gew.%iger PVA/PVA-Copolymer-Lösung hergestellte Schichten optimale Ergebnisse liefern.

Die Vernetzung der PVA/(PVA-Copolymer) Farbstoffmembranen erfolgt in wässrig-alkalischer Lösung, wie z. B. mit Natriumcarbonatlösung bei erhöhter Temperatur, wobei die besten Ergebnisse bei Natriumcarbonatkonzentrationen von mindestens 20 Gew.% erzielt werden. Ein Temperaturbereich zwischen 60° und 90 °C, vorzugsweise 78° bis 83 °C, ist zweckmässig, während die Eintauchzeit zwischen 10 und 30 Minuten, vorzugsweise bei etwa 20 Minuten, liegt. Bei höheren oder niedrigeren Temperaturen für die gleiche Eintauchzeit erhält man etwas schlechtere Ergebnisse.

Die Gesamtdicke sämtlicher Schichten aus modifiziertem PVA (PVA-Copolymer) auf dem porösen Träger soll im Bereich von 0,4 bis 10, vorzugsweise von 1 bis 6 µm liegen.

Die Porengrösse des semipermeablen Films aus modifizierten PVA (PVA-Copolymer) auf dem porösen Träger ist etwa 10 bis 1 000 Å, vorzugsweise 10 bis 200 Å und insbesondere 10 bis 120 Å.

Nach dem Giessen auf einen porösen Träger zur Membranbildung kann der so (mit gegebenenfalls ionisierbaren Gruppen (c') oder (c")) modifizierte PVA/PVA-Copolymer mit verschiedenen chemischen Reaktionspartnern weiter umgesetzt werden, beispielsweise nach der untenstehenden Folge von Reaktionsstufen in dieser Reihenfolge :

(a) mit einer mindestens zwei funktionelle Gruppen enthaltenden monomeren organischen Verbindung,

(b) mit einem linearen oder verzweigten polyfunktionellen Oligomer oder Polymer und

(c) mit ionisierbare Gruppen enthaltenden Verbindungen (Vernetzungsmittel).

Die reaktionsfähigen Verbindungen (c) enthalten mindestens eine (vorzugsweise mindestens zwei) Reaktivgruppe (n). Das Herstellungsverfahren wird unter solchen Bedingungen ausgeführt, dass das aus (mit (c') oder (c") modifiziertem) PVA/PVA-Copolymer (als Membran gegossen) sowie der Komponente (a) erhaltene Reaktionsprodukt jeweils noch mindestens eine Reaktivgruppe aufweist ; dieses Reaktionsprodukt wird dann mit (b) und weiterhin mit (c), welches mindestens eine ionisierbare Gruppe und mindestens eine (vorzugsweise mindestens zwei) mit der Komponente (b) reaktionsfähige Gruppe (n) enthält, umgesetzt.

Bei der Herstellung (bzw. weiteren Modifizierung) solcher Membranen, die durch Giessen des Gemisches aus PVA/PVA-Copolymeren und dem Komponenten (c') oder (c") auf einen porösen Träger erhalten werden, wird so verfahren, dass man zunächst die Membran in eine Lösung bringt, welche die Komponente (a) enthält, die mit den Hydroxylgruppen der Ausgangsmembran reagiert. Die Reaktionsbedingungen werden so gewählt, dass nicht alle reaktiven funktionellen Gruppen der Komponente (a) verbraucht werden. Die nicht umgesetzten Gruppen der nun an die Membran gebundenen Komponente (a) werden dann mit der polymeren oder oligomeren polyfunktionellen Komponente (b) umgesetzt. Es ist auch möglich, dass ein Teil der Moleküle der reaktiven Komponente (a) sich mit mehr als einer Hydroxylgruppe des PVA umsetzt, so dass die Mebran vernetzt wird. Durch Kontrolle der Reaktionsbedingungen, wie Konzentration, Reaktionsdauer, Temperatur und pH-Wert, kann das Verhältnis von polyfunktionellen reaktiven Molekülen, welche vernetzen (und dadurch mehr als eine Hydroxylgruppe binden), gesteuert werden. Nach dieser Umsetzung wird die Membran aus dieser Lösung entfernt und in eine zweite Lösung, welche die Komponente (b) enthält, gebracht. Einige der funktionellen Gruppen der Komponente (b) werden nun mit den reaktiven Gruppen des Reaktionsproduktes aus PVA und (a) weiter umgesetzt, während andere Gruppen für weitere Umsetzungen freibleiben. Die Variablen dieser Reaktionsstufe (Dauer, Konzentration, Temperatur und pH-Wert) hängen vom Polymerisationsprodukt oder Molekül ab, an das die Komponente (b) gebunden wird. Diese Reaktionsstufe bezweckt die (weitere) Vernetzung der Membranen und die Einführung von oligomeren oder polymeren (polyfunktionellen und

reaktionsfähigen Molekülen in die Oberfläche der Membranen. Im letzten Schritt der Modifizierung der Membranen wird die Komponente (b) vernetzt und es werden noch ionogene Gruppen eingeführt, indem man das Umsetzungsprodukt aus den PVA bzw. PVA/Copolymeren und den Komponenten (c') oder (c''), (a) und (b) mit einer wässrigen Lösung der Komponente (c) weiter umsetzt.

Die einzelnen Umsetzungen werden in der Regel mit 0,5-30 Gew.%igen Lösungen jeder der Komponenten durchgeführt ; sie können in der Regel jeweils 1 bis 150 Minute (n) dauern.

Ist die Komponente (a) z. B. Cyanurchlorid, so kann etwa 0,5 bis 10 Gew.%ige Lösungen in Petroläther (Siedebereich 40 bis 200 °C) oder einem anderen, die Membran nicht auflösenden Lösungsmittel, auf die vorher mit Alkali, z. B. Natriumbicarbonatlösungen, behandelte Membran während 5 Minuten bis vier Stunden einwirken lassen. Die Reaktionszeit verkürzt sich, wenn man höher konzentrierte Lösungen der Komponente (a) verwendet. Nach einer Zwischenspülung kann man dann die Membran z. B. mit Polyäthylenimin (Komponente (b)), das in 5 bis 20 Gew.%iger wässriger, mit z. B. Salzsäure auf einen pH-Wert von 8 bis 12 eingestellter Lösung vorgelegt wird, reagieren lassen. Die Reaktionszeit kann etwa 10 Minuten bis vier Stunden und die Reaktionstemperatur etwa 0° bis 40 °C betragen. Nach einer weiteren Zwischenspülung mit Wasser erfolgt dann die Reaktion mit der Komponente (c), z. B. einem Reaktivfarbstoff, wobei die Reaktion ein- oder zweistufig geführt werden kann. Im Zweistufenverfahren wird die Membran in eine Farbstoff/Salzlösung (z. B. Farbstoff (0,5-3 Gew.%)/Natriumchlorid (5-15 Gew.%)) für etwa 5 bis 30 Minuten eingetaucht, wobei die Temperatur etwa 20° bis 40 °C und der pH-Wert der Lösung etwa 5,0-7,0 betragen kann.

Die Membran wird dann aus dieser Lösung herausgenommen und in eine andere, auf einen pH-Wert von etwa 10 bis 11,5 (z. B. mit Natriumcarbonat oder anderen alkalischen Verbindungen) eingestellte Lösung getaucht, in der die Reaktion des Farbstoffs mit der Membran stattfindet. Reaktionstemperatur : 20° bis 40 °C ; Reaktionsdauer : 0,5 bis 1,5 Stunden. Beim einstufigen Verfahren erfolgen die Adsorption des Farbstoffs an die Membran und die chemische Reaktion mit der Membran in derselben Lösung. Die Reaktionsbedingungen entsprechen in etwa den zuvor angegebenen, die Farbstoffkonzentration kann allerdings im Bereich von 1 bis 10 (5) Gew.% liegen, während die Reaktionszeit bei 0,5 bis 2 Stunden liegt.

Anstelle einer Umsetzung mit dem Farbstoff, kann man auch Methyljodid oder ein anderes Alkylierungsmittel einsetzen, um so die Aminogruppen des gebundenen Polyäthylenimins zu quaternieren (kationisch modifizierte Membranen).

Die erfindungsgemässen, durch Mehrfachgiessen dünner Schichten einer wässrigen Lösung von PVA-(Copolymer) und einer ionisierbare Gruppen enthaltenden Verbindung (Reaktivfarbstoff) auf einen porösen Träger hergestellten Kompositmembranen (sowie auch solche Membranen, die durch eine Folge von Reaktionsstufen wie oben beschrieben erhalten wurden) zeigen ausgezeichnete Durchfluss- und Rückhalteeigenschaften sowie auch gute pH-Beständigkeit und mechanische Festigkeit. Beispielsweise haben sich die erfindungsgemässen Membranen bei pH-Werten zwischen 2 und 13 und Temperaturen bis 50 °C bis zu etwa 3 000 Betriebsstunden bewährt.

Betriebsbedingungen ausserhalb dieser Zahlen (z. B. bei höheren oder niedrigeren pH-Werten und höheren Temperaturen — bis zu 90 °C, vorzugsweise bis zu 70 °C) sind ebenfalls möglich.

Die Reihenfolge der oben beschriebenen Modifizierungstufen (a) bis (c) lässt sich auf jede PVA-Membran mit einer Porengrössenverteilung im Bereich von 10-1 000 Å anwenden. Beispielsweise werden die in der U.S. Patentschrift Nr. 4 073 733 beschriebenen Membranen aus einer Giesslösung von PVA-Polymeren hergestellt, die zur Klasse der Vinylalkoholhomopolymeren mit einem Durchschnittspolymerisationsgrad im Bereich von 500 bis 3 500 und einem Verseifungsgrad von 85 bis 100 Molprozent gehören ; geeignete PVA-Copolymere sind solche mit weniger als 10 Molprozent Comonomeren wie sie oben angegeben wurden.

Diese Giesslösungen können ferner einen wasserlöslichen Zusatzstoff wie Polyalkylenglykol mit einem Durchschnittsmolekulargewicht im Bereich von 400 bis 4 000 und vorzugsweise im Bereich von 600 bis 3 000, wobei die Glykole ein Kohlenstoff/Sauerstoffverhältnis von höchstens 3 besitzen, sowie weitere hochsiedende wasserlösliche organische Verbindungen enthalten, die Hydroxyl-, Amid- oder Aminogruppen aufweisen, wie z. B. Polyvinylpyrrolidon, Glycerin, N-Aethylolacetamid oder N-Aethylolformamid.

Diese Membranen besitzen einen asymmetrischen oder gleichmässigen (symmetrischen) Aufbau, der eine poröse Schicht mit einer Porenverteilung im Bereich von 0,02 bis 2 µm und einer Porenzwischenwanddicke im Bereich von 50 bis 5 000 Å aufweist, wobei diese poröse Schicht mit einer dichteren dünnen Oberflächenhaut versehen ist.

Ein weiterer Gegenstand vorliegender Erfindung ist nun ein Verfahren zur weiteren Modifizierung dieser mit einer Haut oder anderweitig dichten Schicht versehenen Membran mit einer ähnlichen Porengrössenverteilung wie der oben beschriebenen, d. h. von 10 bis 1 000 Å. Dieses Verfahren ist dadurch gekennzeichnet, dass man eine wässrige Lösung eines Polyvinylalkohols (Polyvinylalkoholcopolymeren) und eines auslaugbaren (auswaschbaren) wasserlöslichen Zusatzstoffs auf die eine Fläche eines porösen Trägers giesst, gegebenenfalls den Film trocknet, mit einer wässrig-alkalischen Lösung behandelt und abspült und den Film mit

(a) einer mindestens zwei funktionelle Gruppen enthaltenden, monomeren organischen Verbindung,
(b) einem linearen ober verzweigten polyfunktionellen Oligomer oder Polymer und
(c) einer ionisierbare Gruppen enthaltenden, vernetzend wirkenden Verbindung umsetzt.

Das Herstellungsverfahren für die obenerwähnten Membranen besteht darin, dass man eine gegossene Schicht, die mit einer Lösung hergestellt worden ist, die je (5) 10-20 Gew.-% PVA bzw. PVA/Copolymer und auslaugbaren wasserlöslichen Zusatzstoff enthält, in ein Koagulierbad aus konzentrierter Natronlauge gibt. Diese Zusatzstoffe können bis zur doppelten Menge des Polyvinylalkohols bzw. PVA/Copolymers eingesetzt werden und bestimmen somit die Porosität der hautartigen Schicht. Gegebenenfalls führt vollständiges Trocknen der Giesslösung mit nachfolgendem Auslaugen in diesem Koagulierbad zu einer porösen dichten Schicht in gleichförmiger Verteilung.

Die Koagulierung dieser Membranen in den alkalischen Lösungen macht die Membran unlöslich und fixiert ihre Struktur, wodurch eine weitere Modifizierung ermöglicht wird. Eine weitere Vernetzung der Membran erfolgt während der obenbeschriebenen Stufe (a), wodurch der Membran weitere Widerstandsfähigkeit gegen Verdichtung verliehen wird. Da die Vernetzungsreaktion hauptsächlich auf der freiliegenden Oberfläche der Membran erfolgt, ist die Wirksamkeit dieser Stufe begrenzt. Eine weitere Verbesserung lässt sich dabei durch Zusatz eines Vernetzungsmittels (Verbindung (a) oder (c')) direkt in die Giesslösung erreichen, was Membranen mit verbesserter Widerstandsfähigkeit gegen Verdichtung liefert. Die Verwendung der Komponente (c') ist zumindest dann bevorzugt, wenn es sich um solche Verbindungen (c') handelt, die mit der Giesslösung verträglich sind. Dieses Modifizierungsverfahren ist ein weiterer Gegenstand vorliegender Erfindung und ist dadurch gekennzeichnet, dass man (I) eine wässrige Lösung von Polyvinylalkohol/Polyvinylalkoholcopolymer, einem Vernetzungsmittel und gegebenenfalls einem auslaugbaren wasserlöslichen Zusatzstoff auf die die eine Fläche eines porösen Trägers giesst, gegebenenfalls den Film trocknet, vernetzt und dann (II) gegebenenfalls mit

(a) einer mindestens zwei funktionelle Gruppen enthaltenden, monomeren organischen Verbindung,

(b) einem linearen oder verzweigten polyfunktionellen Oligomer oder Polymer und

(c) einer ionisierbare Gruppen enthaltenden, vernetzend wirkenden Verbindung umsetzt.

Beispielsweise kann man eine Giesslösung, die 16 Gew.% PVA, etwa 4 Gew.% Polyäthylenglykol (Molekulargewicht 2 000) und 0,5 Gew.% Cyanurchlorid in einem 9 : 1 Aceton/Wassergemisch bei 0 °C gelöst enthält, zum Giessen von Membranen auf einem wie oben beschriebenen porösen Celgard (R)-Träger einsetzen und bei Raumtemperatur unter alkalischen Bedingungen vernetzen. Weitere Modifizierung über Stufen (a) bis (c) oder wahlweise Stufen (b) bis (c) ergibt Membranen mit hohem Durchfluss- sowie Rückhaltevermögen. Diese Giesslösung lässt sich ohne weiteres 10 bis 20 Stunden lang verwenden.

Die Membranen können je nach Verwendungszweck verschiedene Formen aufweisen. Sie können z. B. plattenförmig, blattförmig, röhrenförmig, in Form einer Tasche, eines Kegels oder von Hohlfasern vorliegen. Sie lassen sich in spiralgewickelte, röhrenförmige oder Platten- und Rahmenbausteine einbauen. Bei starken Druckbelastungen können die Membranen natürlich durch Drahtsiebe oder Lochplatten, Vliesstoffe, Papier usw. gestützt werden.

Die erfindungsgemässen Membranen sind im Prizip für die folgenden Zwecke verwendbar :

(a) Trennung geladener (ionogener) Moleküle von ungeladenen Molekülen ;

(b) Trennung entgegengesetzt geladener Moleküle ;

(c) Trennung geladener ionogener Substanzen mit verschiedenen Molekulargewichten und/oder verschiedener Ladung, einschliesslich solcher mit gleicher Ladung.

Insbesondere sind die folgenden Anwendungen vorteilhaft :

(1) Die Trennung von organischen und auch metallorganischen ionogenen Substanzen (Farbstoffe, Metallkomplexfarbstoffe) von Nebenprodukten aus einer Reaktionsmischung und anderen Substanzen, welche darin enthalten sind z. B. von Salzen wie Natriumchlorid, Natriumsulfat oder Natriumacetat.

(2) Die Trennung von Schwermetallkomplexen von solchen Salzen, welche keine Komplexe bilden, z. B. bei der Behandlung von Abwässern.

(3) Die Reinigung von Abwässern, welche bei der Produktion und Anwendung von Farbstoffen anfallen.

(4) Die Trennung von Proteinen oder Hormonen, welche ähnliche Molekulargewichte haben, jedoch entgegengesetzt geladen sind.

(5) Die Trennung von ionischen Tensiden (Detergentien, Netzmittel oder Dispergatoren) von anderen Chemikalien, welche in der Reaktionsmischung nach der Herstellung der Tenside vorhanden sind (Nebenprodukte, überschüssige Ausgangsstoffe).

(6) Die Entfernung von ionogenen Tensiden aus Abwässern.

(7) Die Trennung von ionogenen Molekülen von Wasser, d. h. die Konzentrierung von wässrigen Lösungen, welche Metallkomplexe, Tenside, Farbstoffe oder Proteine enthalten, wobei bessere Ergebnisse bezüglich des Wirkungsgrades (Durchfluss pro Zeiteinheit) und des Trenneffektes im Vergleich zu bekannten Membranen erzielt werden.

Die Verfahren zur Trennung von (gelösten) Substanzen (und dies ist ein weiterer Gegenstand der vorliegenden Erfindung) sind dadurch gekennzeichnet, dass man wässrige Lösungen von Mischungen der genannten Substanzen (Verbindungen) unter Druck (z. B. Umkehrosmose) über eine wie zuvor beschriebene semipermeable Membran leitet. Im besonderen seien Verfahren zur Konzentrierung und/oder Reinigung von Flüssigkeiten oder zur Trennung der in diesen Flüssigkeiten gelösten Verbindungen erwähnt, die so durchgeführt werden, dass man die sich auf einer Seite der erfindungsgemässen Membran befindliche Lösung (mit gelösten Stoffen) unter einem Druck, der grösser als der

osmotische Druck der Lösung ist, durch die Membran presst und die Lösung so konzentriert oder reinigt (z. B. von Salzen).

Der Trenneffekt (das Rückhaltevermögen) der Membranen kann wie folgt gemessen werden : Eine kreisförmige Membran von 13 $cm^2$ Fläche wird, auf einem Feindrahtnetz aus rostfreiem Stahl ruhend, in eine zylindrische Zelle aus rostfreiem Stahl eingesetzt. 50 ml der zu untersuchenden Lösung, welche die zu prüfende Substanz in der Konzentration $c_1$ (g Substanz in g Lösung) enthält, werden auf die Membran im Stahlzylinder gegeben und mit Stickstoff einem Druck von 30 bar ausgesetzt. Dabei wird magnetisch gerührt. Die Lösung auf der Austrittsseite der Membran wird auf ihre Konzentration $c_2$ an zu prüfender Substanz untersucht, indem ab Start des Versuches drei Muster von je 5 ml gezogen werden. Im allgemeinen ist die Durchflussmenge durch die membran und die Zusammensetzung der drei Muster konstant. hieraus lässt sich das Rückhaltevermögen als

$$R = [(c_1 - c_2)/(c_1)] \cdot 100\ (\%)$$

berechnen.

Die Durchflussmenge (Volumenmenge), die durch die Membran pro Flächen- und Zeiteinheit hindurchfliesst, beträgt

$$F = V \cdot A^{-1} \cdot t^{-1}$$

wobei :

F = Substanzmenge (Durchfluss/Flux),
V = Volumen,
A = Membranfläche und
t = Zeit ist.

F lässt sich in $m^3/m^2 \cdot d$ ausdrücken, d. h. Kubikmeter je Quadratmeter und Tag oder in $l/m^2 \cdot h$ (d. h. Liter je Quadratmeter Membran und Stunde).

Zusätzlich zur Messung an Flachmembranen wie oben beschrieben werden auch 60 cm lange röhrenförmige Membranen mit einem Aussendurchmesser von 1,38 cm untersucht. Diese röhrenförmigen Membranen werden in einen perforierten Halter aus rostfreiem Stahl mit 2,0 cm Aussendurchmesser und 1,40 cm Innendurchmesser gelegt und das Ganze wird in eine Röhre aus Polycarbonat mit 2,75 cm Innendurchmesser eingeführt.

Der Ausfluss befindet sich zwischen dieser äusseren Kunststofffolie und der Röhre aus rostfreiem Stahl. Die Zugabe erfolgt aus turbulent fliessender Strom der Lösung unter 30 bar Druck. Die Fliessgeschwindigkeit wird konstant bei etwa 14,75 l pro Minute gehalten. Der Flüssigkeitsstrom wird unter diesen Bedingungen durch die Membran auf die Permeatseite gedrückt. Die Berechnung des Rückhaltevermögens (R) und des Durchflusses (F) erfolgt auf die gleiche Weise für die Flachmembranen.

In den untenstehenden Beispielen werden die folgenden Farbstoffe bzw. andere Verbindungen (Komponenten (c), (c') und (c'')) zur Modifizierung der Polyvinylalkoholmembranen eingesetzt :

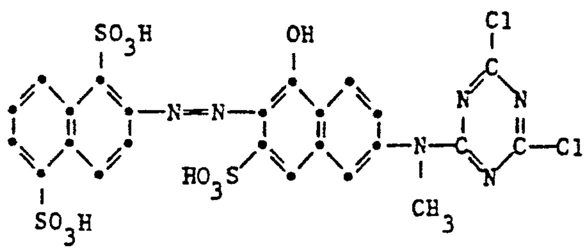

(1)

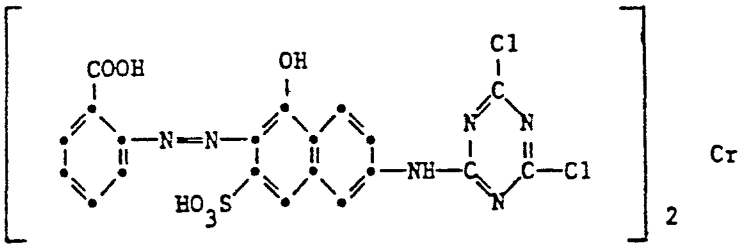

(2)

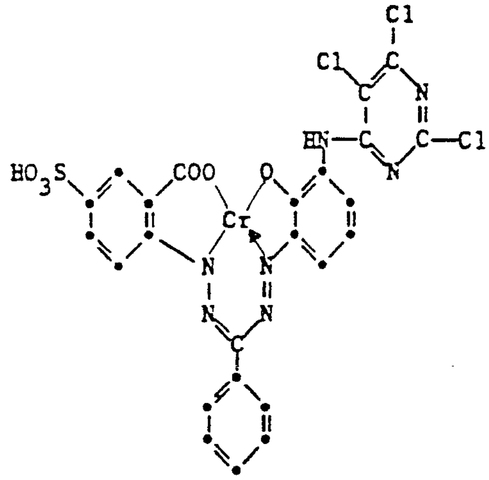

(3)

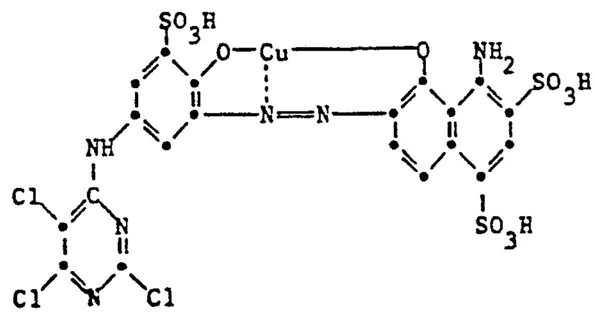

(4)

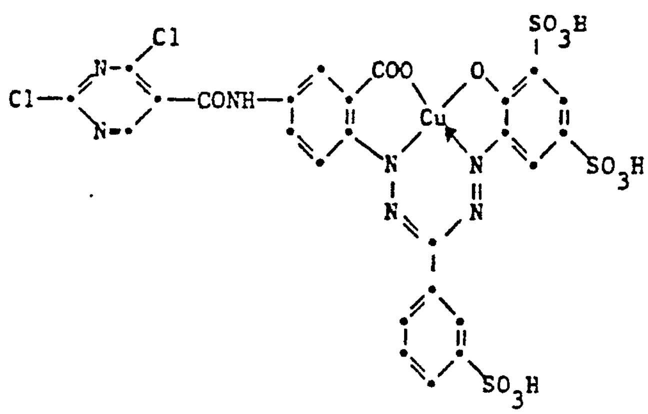

(5

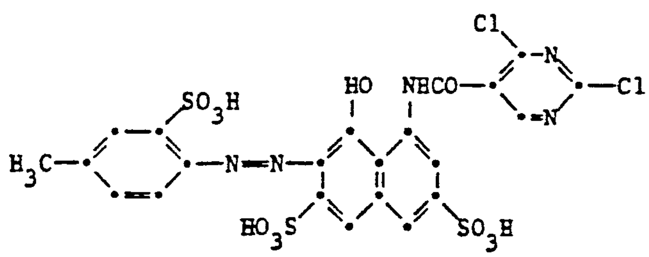

(6

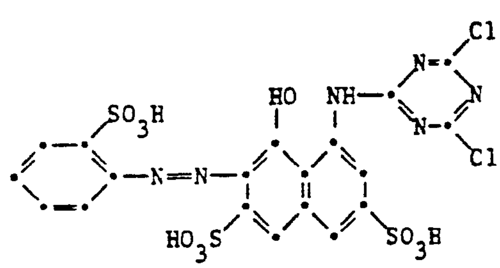

(

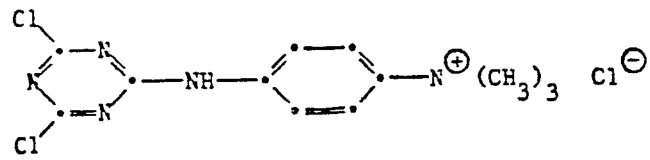

(8)

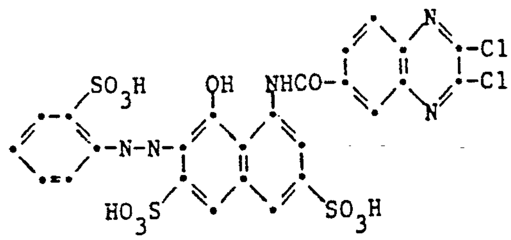

(9)

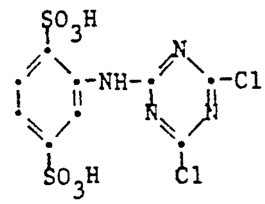

(10a)

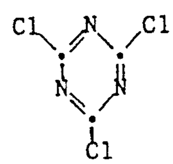

(10b)

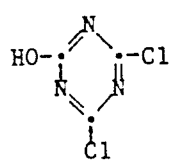

(10c)

Als Testfarbstoffe zur Prüfung der Durchfluss- und Rückhalteeigenschaften der erfindungsgemässen Membranen werden die folgenden Farbstoffe verwendet :

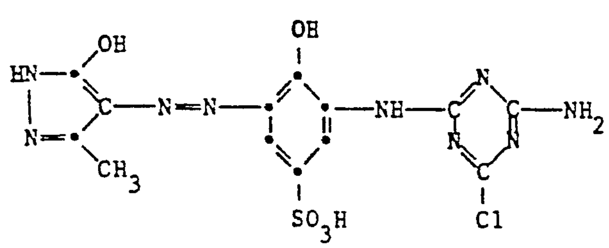

(11)

1 : 1 Gemisch

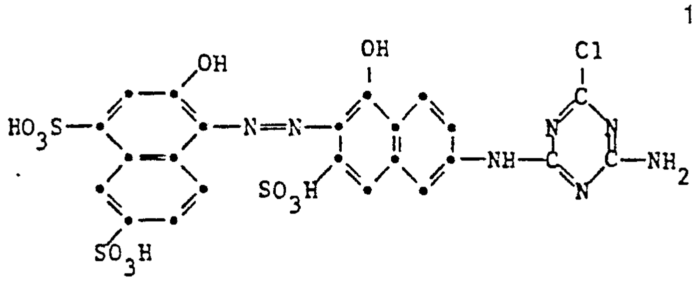

Kupferphthalocyanin 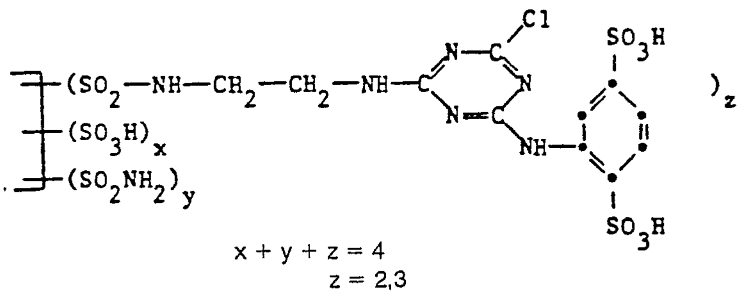 (12)

x + y + z = 4
z = 2,3

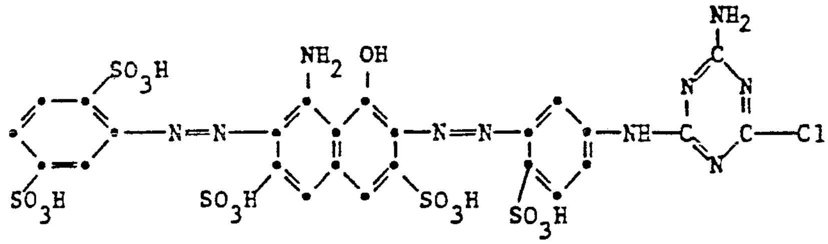 (13)

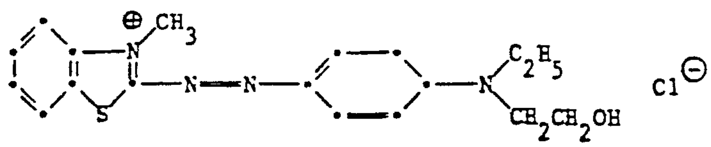 (14)

In den nachfolgenden Beispielen beziehen sich Teile und Prozentangaben jeweils auf das Gewicht, sofern nicht anders Angegeben.

Beispiel 1

5,1 g Polyvinylalkohol (PVA) (Elvanol (R)-Nr. 72-60G) werden bei Raumtemperatur in 100 g entionisiertem Wasser vorgelegt, zum Dispergieren der PVA-Teilchen gerührt und bis zur klaren Lösung erhitzt (70-90 °C). Zu dieser Lösung gibt man bei 70 °C 6,12 g gereinigten Farbstoff der Formel (1), rührt 5 Minuten, kühlt auf 60 °C ab und filtriert bei 2 Bar Druck durch eine Reihe von Filtern von 20 µm, 5 µm bzw. 0,3 µm Grösse. Der Farbstoff wird nach folgender Arbeitsweise gereinigt :

Man gibt 450 g Aceton zu 60 ml der Farbstofflösung (25 %) und mischt 10 Minuten lang. Man lässt eine halbe Stunde absitzen und giesst die obere Schicht ab. Man gibt nochmals 450 g Aceton dazu und mischt 10 Minuten lang. Die Lösung wird durch ein Papierfilter (Whatman Nr. 42) filtriert, und der Niederschlag wird mit Aceton gewaschen und im Vakuum 2 Stunden bei 60 °C getrocknet. Ausbeute : etwa 85 %.

Die obige Lösung wird dann zum Giessen auf einen mikroporösen Polypropylenträger (hydrophiles Celgard (R)-3501 der Firma Celanese Plastics Co...) verwendet. Ein Streifen aus diesem Träger (5 · 20 cm) wird unter leichter Spannung an beiden Enden mit Selbstklebestreifen an eine Glasplatte angeklebt. 5,0 ml PVA-Giesslösung werden an einem Ende aufgebracht und ein Glasstab von hinten durch diese Lösung entlang des Trägerstreifens gezogen, wobei dieser Stab auf dem Träger aufliegt. Der Träger wird so mit der PVA-Lösung beschichtet. Dabei leitet man einen Warmluftstrom (70°-80 °C) über den Träger, der das Wasser verdampft und die PVA-Schicht trocknet. Die Verdampfungszeit beträgt weniger als 1 Sekunde. Diesen Vorgang wiederholt man viermal, und der beschichtete Träger wird dann als Verbundmembran mit vier PVA-Schichten bezeichnet. Anstelle des Glasstabs kann man eine Giessstange mit einer Schicht dichtgewickeltem Draht (0,1 mm Durchmesser) verwenden.

Der PVA beschichtete Trägerstreifen wird von der Glasplatte entfernt und 20 Minuten bei 80 °C in eine 20 %ige wässrige Natriumcarbonatlösung völlig eingetaucht, mit entroniszertem Wasser bis zur vollständigen Entfernung des Natriumcarbonats abgespült und vor der Prüfung trocken gelagert. Natriumcarbonat vernetzt und fixiert den PVA und die Farbstoffmoleküle.

Aus diesem Streifen schneidet man Scheiben von 13 $cm^2$ Fläche und bringt diese in eine Druckzelle zur Prüfung der Durchfluss- und Rückhalteeigenschaften für verschiedene gelöste Stoffe.

Zum Vergleich der obigen Kompositmembranen mit dichten trägerfreien Membranen stellt man letztere aus dem obenerwähnte PVA auf einer Glasplatte durch Ausbreiten der PVA/Farbstofflösung entlang der Länge der Platte her, indem man einen rostfreien Stahlstab mit 0,2 mm Abstand zwischen dem Stab und der Glasplatte von hinten durch die PVA-Lösung zieht. Dies findet bei 70 °C in einem Ofen

statt, und die gegossene Lösung wird eine halbe Stunde im Ofen belassen, um die Membran zu trocknen. Diese wird noch auf der Glasplatte zur Vernetzung unter den gleichen Bedingungen wie für die Kompositmembran in die obenerwähnte Natriumcarbonatlösung eingetaucht. Der dichte PVA-Film löst sich dabei von der Glasplatte ab. Die Membran wird mit entionisiertem Wasser gewaschen, bis kein Natriumcarbonat mehr in der Waschlösung nachweisbar ist.

Die Durchfluss- und Rückhalteeigenschaften sowohl der Kompositmembran als auch des dichtens Films (13 µm Nassfilmdicke) für verschiedene gelöste Stoffe sind in Tabelle 1 angegeben. Der Arbeitsdruck beträgt 30 bar und der pH ist 7,0. Es wird bei Raumtemperatur gearbeitet.

Tabelle 1

| gelöste Verbindung | Konzentration | Kompositmembran | | Trägerfreie Membran | |
|---|---|---|---|---|---|
| | % | Durchfluss $l/m^2 \cdot h$ | Rückhaltung % | Durchfluss $l/m^2 \cdot h$ | Rückhaltung % |
| NaCl | 1 | 48,5 | 41,7 | 21 | 46 |
| $CaCl_2$ | 1 | 26 | 20,6 | 10,7 | 23 |
| $Na_2SO_4$ | 1 | 41,8 | 70 | 18,5 | 78,6 |
| Toluolsulfonsäure | 1 | 53,3 | 69,4 | 21,3 | 78,8 |
| Rohrzucker | 1 | 28,6 | 61,7 | 12,2 | 67 |
| Farbstoff (Formel 11) | 1,5 | 30 | 98,8 | 18,8 | 99,94 |
| Farbstoff (Formel 12) | 1,5 | 38,3 | 99,4 | 20 | 99,1 |
| Farbstoff (Formel 13) | 1,5 | 41 | 99,2 | 24 | 98,1 |

Festigkeit:

Die Kompositmembran war 3 000 Stunden bei pH-Werten von 2,0, 5,0, 8,0 und 12,0 bei konstantem Durchfluss ± 10 Vol.% und Rückhaltung ± 2 Gew.% für den Farbstoff der Formel (13) in Betrieb. Die Farbstofflösung wurde alle 100 Stunden ausgewechselt. Die dichte Membran versagte im Durchschnitt nach 100 Stunden bei allen pH-Werten.

Beispiel 2

Eine PVA-Lösung wie in Beispiel 1 beschrieben wird mit einem üblichen Auftragsgerät auf einen 5,0 m langen Polypropylenträger (30 cm breit) gegossen. Es werden vier aufeinanderfolgende PVA-Schichten (mit einer Gesamttrockendicke von 6 µm) gegossen und wie in Beispiel 1 vernetzt und gewaschen.

Tabelle II

| Gelöste Verbindung | Konzentration % | Rückhaltung % | Durchfluss $l/m^2 \cdot h$ |
|---|---|---|---|
| NaCl | 1 | 40 | 51 |
| Farbstoff (Formel 11) | 1,5 | 99,5 | 36 |
| Farbstoff (Formel 13) | 10 | 98,6 | 48 |

## Beispiel 3

Es handelt sich um eine Kompositmembran gemäss Beispiel 1, jedoch hergestellt unter Verwendung des Farbstoffs der Formel (2). Die Durchfluss- und Rückhalteeigenschaften sind in Tabelle III angegeben.

Tabelle III

| Gelöste Verbindung | Konzentration % | Rückhaltung % | Durchfluss $l/m^2 \cdot h$ |
|---|---|---|---|
| NaCl | 1 | 30 | 20,5 |
| $Na_2SO_4$ | 1 | 62 | 19,3 |
| Toluolsulfonsäure | 1 | 74 | 17 |
| Farbstoff (Formel 11) | 1,5 | 98,1 | 14 |
| Farbstoff (Formel 12) | 1,5 | 99,6 | 13 |

## Beispiel 4

Es wird wie in Beispiel 1 verfahren, jedoch unter Verwendung des Farbstoffes der Formel (3). Die Durchfluss/Rückhalteeigenschaften sind in Tabelle IV angegeben.

Tabelle IV

| Gelöste Verbindung | Konzentration % | Rückhaltung % | Durchfluss $l/m^2 \cdot h$ |
|---|---|---|---|
| NaCl | 1 | 24 | 50 |
| $Na_2SO_4$ | 1 | 51 | 46 |
| Farbstoff (Formel 11) | 1,5 | 97 | 36 |
| Farbstoff (Formel 12) | 1,5 | 93 | 40 |
| Farbstoff (Formel 13) | 1,5 | 90 | 45 |

## Beispiel 5

Es wird wie in Beispiel 1 verfahren, jedoch unter Verwendung des Farbstoffs der Formel (4). Die Durchfluss/Rückhalteeigenschaften sind in Tabelle V angegeben.

Tabelle V

| Gelöste Verbindung | Konzentration % | Rückhaltung % | Durchfluss $l/m^2 \cdot h$ |
|---|---|---|---|
| NaCl | 1 | 32 | 47 |
| $Na_2SO_4$ | 1 | 42 | 48 |
| Toluolsulfonsäure | 1 | 48 | 44 |

Tabelle V (Fortsetzung)

| Gelöste Verbindung | Konzentration % | Rückhaltung % | Durchfluss $l/m^2 \cdot h$ |
|---|---|---|---|
| Farbstoff (Formel 12) | 1,5 | 98,4 | 28 |
| Farbstoff (Formel 11) | 1,5 | 97,1 | 36 |
| Farbstoff (Formel 13) | 1,5 | 94 | 40 |

Beispiel 6

Beispiel 1 wird wiederholt, wobei man das Gegenion des Farbstoffs der Formel (1) von $Li^+$, $Na^+$, $NH_4^+$, $K^+$, $Cs^+$ bis Tetramethylammonium (TMA) variiert. Die Gegenionen werden durch Eluieren einer Lösung des Farbstoffs (2,5 g in 20 ml entionisiertem Wasser) aus einer mit dem gewünschten Gegenion beladenen Dowex(R)-50W-Säule ausgetauscht. Die eluierte Lösung wird im Vakuum getrocknet und dann zur Bereitung der in Beispiel 1 beschriebenen PVA/Farbstofflösung verwendet. Die Durchfluss/Rückhalteeigenschaften der Membranen mit verschiedenen Gegenionen gegenüber dem Farbstoff der Formel (13) sind in der Tabelle VI angegeben.

Tabelle VI

| Gegenion | Durchfluss $l/m^2 \cdot h$ | Rückhaltung % |
|---|---|---|
| $Li^+$ | 43,6 | 98,5 |
| $Na^+$ | 35 | 99,3 |
| $NH_4^+$ | 38,3 | 97,7 |
| $K^+$ | 53,3 | 99,5 |
| $Cs^+$ | 55,4 | 98,7 |
| TMA | 60,8 | 98,3 |

Beispiel 7

Der poröse Träger im Beispiel 1 ist ein Polypropylenmaterial mit rechteckigen Poren (Porenabmessungen ungefähr 0,04 × 4 µm). Beispiel 1 wird mit verschiedenen mikroporösen Trägern wiederholt, und die Durchfluss/Rückhalteeigenschaften gegenüber dem Farbstoff der Formel (13), Lösung mit einem Gehalt von 15 000 ppm, pH = 7, bei 30 bar, sind in Tabelle VII angegeben.

Tabelle VII

| Material | Porengrösse (µm) | Durchfluss $l/m^2 \cdot h$ | Rückhaltung % |
|---|---|---|---|
| 1. Acrylnitrilpolymer auf Polyamidnetz (Acropor-Warenzeichen) | 0,2 | 13 | 99,58 |
| 2. Cellulosehaltiger Träger (Metricel-Warenzeichen) | 0,2 | 26,8 | 99,78 |
| 3. Polysulfon | 0,15 | 10,57 | 99,83 |

Beispiel 8

Beispiel 1 wird wiederholt, jedoch trägt man dabei unterschiedlich viele Schichten (1, 2, 3 bzw. 4) aus PVA/Farbstofflösung auf die Membranen auf. Die Auswirkungen der verschiedenen Anzahl von Schichten auf die Durchfluss-/Rückhalteeigenschaften gegenüber einer 15 000 ppm-Lösung des Farbstoffs der Formel (13) bei 30 Bar und pH 7 sind in Tabelle VIII angegeben.

Tabelle VIII

| Anzahl Schichten | Rückhaltung % | Durchfluss $l/m^2 \cdot h$ |
|---|---|---|
| 1 | 63,1 | 114 |
| 2 | 93,3 | 70 |
| 3 | 98,86 | 56 |
| 4 | 99,76 | 48 |

Beispiel 9

Die Kompositmembran aus Beispiel 8 mit einer Membranschicht aus PVA/Farbstofflösung wird durch die untenstehende chemische Rekationsfolge weiter modifiziert : Man legt die Membran 2 Stunden bei Raumtemperatur in ein Petrolätherbad (Siedepunktschnitt 60°-80 °C), das 2 % Cyanurchlorid und eine 2 %ige Natriumbicarbonatsuspension enthält. Die Membran wird dann 1 Stunde mit Eiswasser gespült und eine halbe Stunde bei Raumtemperatur in eine wässrige 10 %ige Polyäthyleniminlösung vom pH 10,8 gelegt. Anschliessend spült man die Membran 1 Stunde unter Leitungswasser und legt sie 15 Minuten bei Raumtemperatur in eine 10 % NaCl und 1 % des Farbstoffs der Formel (5) enthaltende wässrige Lösung. Danach wird die Membran 30 Minuten in eine 2 % Natriumcarbonat enthaltende wässrige Lösung gelegt und schliesslich mit 10 %iger Essigsäure gespült. Rückhaltung bzw. Durchfluss der so modifizierten Membran bei 30 bar Druck betragen 93 % bzw. 85 $l/m^2 \cdot h$ gegenüber dem Farbstoff der Formel (13) (Lösung mit einem Gehalt von 15 000 ppm, pH = 7).

Beispiel 10

Man wiederholt die Modifizierung gemäss Beispiel (9) mit der zwei Schichten enthaltenden Kompositmembran aus Beispiel 8. Rückhaltung bzw. Durchfluss gegenüber dem Farbstoff der Formel (13) bei 15 000 ppm betragen 99,9 % bzw. 27 $l/m^2 \cdot h$ unter denselben Bedingungen wie in Beispiel 9.

Beispiel 11

Beispiel 9 wird wiederholt, wobei man jedoch die Membran zunächst 15 Minuten in 5 % $NaHCO_3$ konditioniert und als weitere Abänderung statt des Polyäthylenimins vom Durchschnittsmolekulargewicht 30 000 ein Polyäthylenimin vom Molekulargewicht 189 in 20 %iger Lösung bei pH 10,8 und Raumtemperatur 2 Stunden lang anwendet. Die sich ergebende Rückhaltung bzw. der Durchfluss für den Farbstoff der Formel (13) (1,5 %ige wässrige Lösung) betragen 88 % bzw. 27 $l/m^2$. unter denselben Prüfbedingungen wie in Beispiel 9.

Beispiel 12

Beispiel 9 wird wiederholt mit der Abänderung, dass man die Membran wie in Beispiel 11 mit $NaHCO_3$ vorbehandelt, jedoch anstelle von Cyanurchlorid Tetrachlorpyrimidin bei der gleichen Konzentration verwendet. Die Temperatur der Reaktionsstufen ist die gleiche, ausser für das Polyäthylenimin enthaltende Bad, das 40 °C warm ist. Die Durchfluss- bzw. Rückhalteeigenschaften der membran für Farbstoff der Formel (13) unter denselben Prüfbedingungen wie in Beispiel 9 belaufen sich auf 79 $l/m^2 \cdot h$ bzw. 95 %.

Beispiel 13

Man giesst mehrere semipermeable Schichten auf einen microporösen Polypropylenträger gemäss Beispiel 1. Diese so erhaltene Membran wird dann mit einer einzigen (ebenfalls auf einem Polypropylenträger gegossenen) semipermeablen Schicht äquivalenter Dicke verglichen.

Zum Beschichten des 25 µm dicken Trägers verwendet man einen Giesstab mit 50 µm Abstand. Die Enden des Giesstabs erstrecken sich über den Träger hinaus, so dass der wirkliche Abstand zwischen dem Giesstab und dem Träger 25 µm beträgt. Die Giesslösung und deren Herstellung und Feststoffgehalt sind gleich wie in Beispiel 1. Die Trockenfilmdicke einer 10 %igen Lösung ist somit ungefähr 2,5 µm. Die Arbeitsweise zur Verdampfung des Wassers aus der gegossenen Schicht (um eine Trockenmembran zu erhalten) ist dieselbe wie in Beispiel 1. Die Ergebnisse des Vergleichs zwischen Mehrfach- und Einzelschichten sind in Tabelle IX angegeben. Zudem ist die Auswirkung von Aenderungen des Trägermaterials angeführt.

(Siehe Tabelle IX, Seite 19 f.)

Tabelle IX

| Träger | Einzelschichtüberzug | | | Mehrfachbeschichtung | | | | |
|---|---|---|---|---|---|---|---|---|
| | Dicke (µm) | Rückhaltung. Farbstoff der Formel (13) (15 000 ppm) % | Durchfluss $l/m^2 \cdot h$ | Anzahl Schichten | Schichtdicke je (µm) | Gesamtdicke (µm) | Rückhaltung % | Durchfluss $l/m^2 \cdot h$ |
| 1. Polypropylen | 2,5 | 88,3 | 53,3 | | | | | |
| | 5,0 | 90,3 | 39,5 | 2 | 2,5 | 5,0 | 98 | 21,9 |
| Porengrösse | 7,5 | 90,8 | 47,6 | 3 | 2,5 | 7,5 | 99,04 | 24,0 |
| 0,2•0,04 µm | 10 | 91,1 | 39,3 | 4 | 2,5 | 10,0 | 99,2 | 23 |
| 2. Acrylnitril | 5 | 19 | 123,0 | | | | | |
| auf Polyamidnetz | 7,5 | 51 | 10,5 | | | | | |
| (Acropor-Warenzeichen | 10 | 53 | 58,0 | 2 | 5,0 | 10,0 | 99,6 | 20,4 |
| Porengrösse | 20 | 90 | 12,6 | 4 | 5,0 | 20,0 | 99,9 | 9,4 |
| 0,2 µm | 27,5 | 99 | 7,0 | 4 | 5,0+2,5 | 27,5 | 99,9 | 8 |
| 3. Cellulosehaltiger Träger | 5,0 | 99,8 | 30,4 | | | | | |
| (Metricel-Warenzeichen | 7,5 | 99,84 | 18 | | | | | |
| Porengrösse | 10 | 99,7 | 17 | 2 | 5,0 | 10,0 | 99,9 | 17 |
| 0.15 µm | 20 | 99,89 | 15,5 | 4 | 5,0 | 20,0 | 99,9 | 12 |

Aus Tabelle IX ist ersichtlich, dass für die Träger 1 und 2 eine Mehrfachbeschichtung zu Membranen führt, die den Membranen mit äquivalenten Einzelschichten im Rückhaltevermögen überlegen sind. Die Ergebnisse mit Träger 3 zeigen äquivalente Rückhaltevermögen sowohl für Einzel- als auch Mehrfachbeschichtung. Dieser Träger besteht jedoch aus cellulosehaltigem Material und besitzt nicht die chemische Stabilität der Träger 1 oder 2. Im Hinblick darauf ist die Mehrfachbeschichtungsmethode anscheinend in einzigartiger Weise für gewisse Träger verwendbar, und bezüglich des Durchfluss- und Rückhaltevermögens sowie der chemischen Stabilität ergibt die genannte Beschichtung des Trägers 1 die besten Resultate.

Der Träger 1 ist auch hinsichtlich Elastizität den übrigen Trägermaterialien überlegen. Bei der Fertigung röhrenförmiger Membranen aus flachen Blättern durch Spiralwicklung soll das röhrenförmige Material eine gewisse Elastizität besitzen, da sich die Röhren bei Druckanwendung ausdehnen. Zur Prüfung der mit PVA überzogenen Träger wurde ein Instron-Prüfgerät verwendet, um die PVA/Trägermembran mit konstanter Geschwindigkeit zu dehnen. Die Ergebnisse sind in Tabelle X angegeben.

Tabelle X

| Träger [1)] | Maximal-spannung gerade vor dem Reissen (Dehnung, m%) | Durchfluss $l/m^2 \cdot h$ | | Rückhaltung % | |
|---|---|---|---|---|---|
| | | Vor | Nach | Vor | Nach |
| 1 | 19,23 (Keine Anzeichen für Reissen des Materials) | 39 | 34 | 99,1 | 99,1 |
| Polysulfon-HT-100 (Warenzeichen) | 5,3 | 7,2 | 3,3 | 99,7 | 99,7 |
| 2 | 5,4 | 14,5 | 13,1 | 99,56 | 99,12 |
| 3 | 4,5 | 18 | 27 | 99,9 | 99,6 |

(1) Träger 1, 2 und 3 wie in Tabelle IX

Eine gewisse Dehnung aller Träger ohne Verlust an Durchfluss- oder Rückhaltevermögen wäre zwar annehmbar, doch lässt sich nur der Träger 1 um mehr als 6 % ohne Reissen dehnen. Dieser Träger zeigt sogar bei etwa 20 % Dehnung keine Anzeichen für Reissen.

Um darzulegen, dass die Anwendung des Mehrfachgiessens von PVA auf diesen Träger für das PVA-System spezifisch ist, wird Celluloseacetat aus Aceton (10 % Celluloseacetat Gew./Vol.) auf diesen Träger in Mehrfach- oder äquivalenten Einzelschichten gegossen. Die Ergebnisse sind in Tabelle XI angegeben. Die Membran wird mit 10 mM Natriumchloridlösung bei 40 Bar geprüft.

Tabelle XI

| Einzelschicht | | | Mehrfachschichten | | | | |
|---|---|---|---|---|---|---|---|
| Dicke (µm) | Durchfluss $l/m^2 \cdot h$ | Rückhaltung % | Anzahl-Schichten | Schichtdicke je (µm) | Gesamtdicke (µm) | Durchlauf $l/m^2 \cdot h$ | Rückhaltung % |
| 7,5 | 14,3 | 81,7 | 3 | 2,5 | 7,5 | 6,04 | 78,3 |
| 12,5 | 3,08 | 68 | 5 | 2,5 | 12,5 | 5,8 | 72 |

Aus Tabelle XI ist ersichtlich, dass zwischen den Rückhalteeigenschaften einer auf dem Träger 1 durch mehrfach gegossene Schichten oder eine äquivalente Einzelschicht gebildeten Celluloseacetatmembran kaum ein Unterschied besteht.

Beispiel 14

Wie in Beispiel 1 werden einerseits 5 Schichten mit rascher Verdampfung auf einen Träger gegossen, wobei man eine Kompositmembran mit Rückhaltevermögen bzw. Durchfluss von 99,1 % bzw. 35 $l/m^2 \cdot h$ erzielt. Andererseits werden in einem zweiten Versuch die Schichten unter Normalbedingungen getrocknet. Die Membran weist ein Rückhaltevermögen von 95 % und einen Durchfluss von 35 $l/m^2 \cdot h$ auf. Der Unterschied von 4 % im Rückhaltevermögen ist von Bedeutung, da er eine 80 %ige Reduktion des durch die Membran passierenden Farbstoffs darstellt. Das Rückhaltevermögen wird mit einer 1,5 %igen Lösung des Farbstoffs der Formel (13) bei 25 bar geprüft.

Dieses Beispiel zeigt deutlich den Effekt der Verdampfungsgeschwindigkeit beim mehrfachen Giessen.

Beispiel 15

Eine wässrige Lösung, die 16 % Polyvinylalkohol (Verseifungsgrad 99,9 Mol%, Polymerisationsgrad 1 700) und 1,6 % Polyäthylenglykol (mittleres Molekulargewicht 2 000) enthält, wird auf 100 °C erhizt. Diese Lösung wird dann auf einen Polypropylenträger (wie in Beispiel 1) aufgebracht und mit einer Rakel (Abstand 0,2 mm) verteilt. Unmittelbar nach dem Giessen wird die noch feuchte Membran zusammen mit dem Träger 10 Minuten in ein 30 %ige wässriges Natriumhydroxydbad von Raumtemperatur eingetaucht. Anschliessend taucht man die Membran (und den Träger) in eine neutrale (pH-Wert : 7) 30 %ige Natriumsulfatlösung für eine Stunde ein und wäscht dann mit Wasser während 12 Stunden.

Die so erhaltene Membran zeigt ein Rückhaltevermögen für eine Lösung des Farbstoffs der Formel (13) (1 500 ppm) bei 20 bar von 15,4 %.

Die Membran wird dann in zwei Stücke geteilt.

(a) Ein Teil wird mit einer 10 Gew.-%igen wässrigen Lösung von Polyäthylenimin (M.G. 30 000) bei Raumtemperatur (10 Minuten) behandelt,

(b) der andere Teil der Membran wird gemäss der in Beispiel 9 beschriebenen Methode modifiziert.

Das Rückhaltevermögen für den gleichen Farbstoff unter den angegebenen Bedingungen beträgt für (a) 84 % und für (b) 98 %.

Beispiel 16

Beispiel 1 wird wiederholt, wobei jedoch der Reaktivfarbstoff der Formel (9) anstelle des Reaktivfarbstoffes der Formel (1) verwendet wird. Der PVA/Trägerstreifen wird von der Glasplatte entfernt und 45 Minuten bei 90 °C in eine 20 %ige wässrige Natriumcarbonatlösung eingetaucht. Weiterbehandlung und Tests wie in Beispiel 1 angegeben. Die Ergebnisse sind in Tabelle XII angegeben. Der Arbeitsdruck beträgt 30 bar, der pH-Wert der getesteten Lösungen beträgt 7,0 ; es wird bei Raumtemperatur gearbeitet.

Tabelle XII

| gelöste Verbindung | Konzentration (%) | Durchfluss $l/m^2 \cdot h$ | Rückhaltung (%) |
|---|---|---|---|
| NaCl | 1,0 | 34 | 32 |
| Farbstoff (Formel 11) | 1,5 | 21 | 96 |
| Farbstoff (Formel 13) | 0,5 | 30 | 97 |

Beispiel 17

Beispiel 1 wird wiederholt, wobei jedoch die Verbindung der Formel (10a), anstelle der Verbindung der Formel (1) verwendet wird.

Man verwendet eine 3 %ige Lösung der Verbindung der Formel (10).

Die erhaltene Kompositmembran zeigt gegenüber Kochsalz (1 %ige Lösung) einen Durchfluss von 25 $l/m^2 \cdot h$ und eine Rückhaltung von 46 % ; für den Farbstoff der Formel (12) (0,2 %) lauten die Werte 16 $l/m^2 \cdot h$ und 97,6 %. Die Testbedingungen sind 30 bar, bei einem pH-Wert von 7,0 und Raumtemperatur.

Beispiel 18

Beispiel 17 wird wiederholt, wobei jedoch die Verbindung der Formel (8) anstelle der Verbindung der Formel (10a) verwendet wird.

Unter den angegebenen Testbedingungen erhält man die in Tabelle XIII angegebenen Ergebnisse.

Tabelle XIII

| gelöste Verbindung | Konzentration (%) | Durchfluss $l/m^2 \cdot h$ | Rückhaltung (%) |
|---|---|---|---|
| NaCl | 1,0 | 23 | 31 |
| $CaCl_2$ | 1,0 | 18 | 49 |
| Farbstoff (Formel 14) | 0,15 | 9 | 95 |

Beispiel 19

Polyvinylalkohollösung (ohne Farbstoff) wird auf einen Polypropylenträger gegossen und getrocknet wie in Beispiel 1 angegeben. Man stellt eine Kompositmembran mit 2 PVA-Schichten her, die dann wie folgt modifiziert wird : Die Membran wird 2 Stunden bei Raumtemperatur in Petroläther (60°-80 °C)-Lösung gelegt, die 2 % Cyanurchlorid und 2 % Natriumbicarbonat (als Suspension) enthält.

Die Membran wird dann eine Stunde lang mit Eiswasser gespült und eine halbe Stunde bei Raumtemperatur in einer wässrigen, 10 %igen Polyäthyleniminlösung (MG-30 000) mit einem pH-Wert von 10,8 behandelt.

Anschliessend spült man die Membran eine Stunde unter Leitungswasser und legt sie dann 15 Minuten in eine wässrige Lösung von Raumtemperatur, die 10 % Kochsalz und 1 % des Farbstoffs der Formel (5) enthält.

Dann wird die Membran noch 30 Minuten in einer 2 % Natriumcarbonat enthaltenden wässrigen Lösung behandelt und schliesslich mit 10 %iger Essigsäure gespült.

In der nachfolgenden Tabelle XIV sind die Ergebnisse für die Membran vor und nach der Modifikation angegeben.

Tabelle XIV

| gelöste Verbindung | Konzentration | Vor der Modifikation | | Nach der Modifikation | |
|---|---|---|---|---|---|
| | % | Durchfluss $l/m^2 \cdot h$ | Rückhaltung % | Durchfluss $l/m^2 \cdot h$ | Rückhaltung % |
| NaCl | 1 | 75 | 22 | 33 | 39 |
| Farbstoff (Formel 12) | 1,5 | 53 | 86 | 18 | 98 |
| Farbstoff (Formel 13) | 1,5 | 68 | 82 | 24 | 96 |

(Testbedingungen : 30 bar/Raumtemperatur/pH-Wert : 7)

Beispiel 20

Beispiel 10 wird wiederholt (Herstellung einer Kompositmembran durch zweimaliges Vergiessen von PVA/Farbstofflösungen), wobei diese Lösungen jedoch zusätzlich noch 5 % Polyäthylenglykol (MG-2000) enthalten). Nach der Alkalibehandlung wird die Membran 3 Stunden gewässert und dann wie in Beispiel

19 modifiziert. Die so erhaltene Membran weist einen Durchfluss bzw. eine Rückhaltung von 42 $l/m^2 \cdot h$ bzw. 90 % gegenüber dem Farbstoff (1,5 %ige Lösung) der Formel (13) auf. Vor der Modifikation betrugen die gleichen Werte 69 $l/m^2 \cdot h$ und 79 %.

Beispiel 21

Beispiel 10 wird wiederholt, wobei man jedoch die Verbindung der Formel (8) anstelle des Farbstoffs der Formel (1) verwendet.

Die so erhaltene Membran weist einen Durchfluss bzw. Rückhalt von 19 $l/m^2 \cdot h$ bzw. 98,6 % gegenüber dem Farbstoff (1,5 %ige Lösung) der Formel (13) auf.

Beispiel 22

Eine 15 %ige Lösung Poly-(Vinylalkohol-Vinylpyrrolidon) (75 : 25), die 15 % des Farbstoffs der Formel (7) enthält wird wie in Beispiel 1 beschrieben zur Herstellung einer Kompositmembran verwendet. Die Kompositmembran mit 4 Copolymer/Farbstoffschichten weist einen Durchfluss bzw. eine Rückhaltung von 42 $l/m^2 \cdot h$ bzw. 96 % gegenüber dem Farbstoff (1,5 %ige Lösung) der Formel (13) auf.

Beispiel 23

Eine 5 %ige PVA-Lösung (97 ml) wird auf 0-5 °C abgekühlt und unter starkem Rühren tropfenweise mit 3 ml einer 3 %igen Lösung der Verbindung der Formel (10 c) (nicht-ionisches Vernetzungsmittel -c") in Aceton versetzt.

Wie im Beispiel 1 beschrieben giesst man mit dieser Lösung 4 Schichten auf einen Polypropylenträger und trocknet sie.

Zur Vernetzung wird das Material (Träger und die Schichten) dann für 20 Minuten bei 80 °C in eine 20 %ige Natriumcarbonatlösung eingetaucht. Anschliessend wird eine Stunde lang in Wasser von Raumtemperatur gewaschen.

Die erhaltene Membran wird dann durch Eintauchen in eine wässrige Lösung von Raumtemperatur, die 10 % Natriumchlorid und 1 % des Farbstoffs der Formel (5) enthält, während 15 Minuten weitermodifiziert. Schliesslich wird die Membran 30 Minuten lang in einer wässrigen, 2 %igen Natriumcarbonatlösung behandelt und dann durch Spülen mit 10 %iger wässriger Essigsäure neutralisiert.

Die vernetzte, aber nicht weiter modifizierte (keine Reaktion mit dem Farbstoff) sowie die modifizierte Membran zeigen folgende Durchfluss bzw. Rückhaltewerte gegenüber dem Farbstoff der Formel (13) (1,5 %ige Lösung).

| | Durchfluss ($l/m^2 \cdot h$) | Rückhaltung (%) |
|---|---|---|
| Nichtmodifizierte Membran: | 32 | 91 |
| Modifizierte Membran: | 20 | 97 |

Beispiel 24

Eine 5 %ige PVA-Lösung gemäss Beispiel 23 wird mit 2 % (w/w) Polyäthylenglykol (2 000) und anstelle der Verbindung (10 c) mit der Verbindung der Formel (10b) versetzt und zur Herstellung einer Membran auf einem Polypropylenträger verwendet. Nach dem Auftragen von 4 Schichten wird das Material 30 Minuten lang in kaltem Wasser behandelt, um das Polyäthylenglykol herauszulösen und anschliessend während 20 Minuten bei 80 °C in einer 20 %igen natriumcarbonatlösung vernetzt. Die Membran wird dann wie in Beispiel 23 angegeben weiter modifiziert.

| | Durchfluss ($l/m^2 \cdot h$ ) | Rückhaltung (%) |
|---|---|---|
| Nichtmodifizierte Membran: | 116 | 57 |
| Modifizierte Membran: | 77 | 90 |

**Ansprüche**

1. Semipermeable Kompositmembranen, die auf einer Oberfläche eines porösen Trägers einen dünnen semipermeablen Film aus Polymeren auf Basis von Polyvinylalkohol aufweisen, dadurch gekennzeichnet, dass dieser Film aus mindestens zwei Schichten Polyvinylalkohol PVA/Polyvinylalkoholcopolymeren (PVA-Copolymeren) besteht, die mit einer mindestens zwei funktionelle Gruppen enthaltenden Verbindung modifiziert sind.

2. Semipermeable Kompositmembranen, die auf einer Oberfläche eines porösen Trägers einen dünnen semipermeablen Film aufweisen, dadurch gekennzeichnet, dass dieser Film aus mindestens einer Schicht PVA/PVA-Copolymeren besteht, die gegebenenfalls mit einem Vernetzungsmittel (c"), das aus einer mindestens zwei funktionelle Gruppen und gegebenenfalls ionisierbare Gruppen enthaltenden Verbindung besteht, vernetzt sind, und der dünne Film mit den Komponenten

(a) einer mindestens zwei funktionelle Gruppen enthaltenden, monomeren organischen Verbindung,

(b) einem linearen oder verzweigten polyfunktionellen Oligomer oder Polymer und

(c) einer ionisierbare Gruppen enthaltenden, vernetzend wirkenden Verbindung umgesetzt ist.

3. Kompositmembran nach einem der Ansprüche 1 oder 2, dadurch gekennzeichnet, dass der poröse Träger aus Polyolefinen, Polyacrylnitrilen, Polyamiden, Polysulfonen oder cellulosehaltigen Materialien besteht.

4. Kompositmembran nach Anspruch 3, dadurch gekennzeichnet, dass der poröse Träger aus Polypropylen besteht.

5. Kompositmembran nach einem der Ansprüche 1 bis 4, dadurch gekennzeichnet, dass der semipermeable Film eine Dicke von mindestens etwa 0,5 µm aufweist.

6. Kompositmembran nach Anspruch 1, dadurch gekennzeichnet, dass der (das) PVA/PVA-Copolymer durch Umsetzung mit einer mindestens zwei reaktionsfähigen Gruppen enthaltenden, farblosen oder vorzugsweise farbigen Verbindung (c') mit ionisierbaren Gruppen modifiziert ist.

7. Kompositmembran nach Anspruch 2, dadurch gekennzeichnet, dass die Komponente (a) eine monomere organische Verbindung ist, die gegebenenfalls substituierte reaktive Mehrfachbindungen oder gegebenenfalls substituierte reaktive Epoxid-, Aziridin-, Aldehyd-, Imidat-, Isocyanat-, Isothiocyanat-, Hydroxyl-, Anhydrid-, Acylhalogenid- oder N-Methylolgruppen enthält, oder (a) eine Verbindung ist, aus der tertiäre Amine oder Anionen abspaltbar sind.

8. Kompositmembran nach Anspruch 2, dadurch gekennzeichnet, dass die Komponente (b) ein Oligomer oder Polymer ist, das als funktionelle Gruppen aliphatische oder aromatische Aminogruppen, Hydroxylgruppen, Thiolgruppen, Isocyanatgruppen und/oder Thioisocyanatgruppen enthält.

9. Kompositmembran nach Anspruch 2, dadurch gekennzeichnet, dass die Komponente (c) eine mindestens eine reaktionsfähige Gruppe sowie ionisierbare Gruppen enthaltende, farblose oder vorzugsweise farbige Verbindung ist.

10. Kompositmembran nach Anspruch 2, dadurch gekennzeichnet, dass das Vernetzungsmittel (c") eine farblose oder worzugsweise farbige, ionische Verbindung ist, die mindestens zwei reaktionsfähige Gruppen aufweist, oder eine nichtionische monomere organische Verbindung ist, die gegebenenfalls substituierte reaktive Mehrfachbindungen oder gegebenenfalls substituierte reaktive Epoxid-, Aziridin-, Aldehyd-, Imidat-, Isocyanat-, Isothiocyanat-, Hydroxyl-, Anhydrid-, Acylhalogenid- oder N-Methylolgruppen enthält, oder eine Verbindung ist, aus der tertiäre Amine oder Anionen abspaltbar sind.

11. Kompositmembran nach einem der Ansprüche 1 bis 10, dadurch gekennzeichnet, dass die Porengrösse nach der Modifikation 10 bis 1 000 Å (1 bis 100 nm) beträgt.

12. Verfahren zur Herstellung einer semipermeablen Kompositmembran nach Anspruch 1, dadurch gekennzeichnet, dass man eine wässrige Giesslösung, die Verbindungen mit mindestens zwei funktionellen (reaktiven) Gruppierungen und PVA/PVA-Copolymere enthält, auf eine Oberfläche eines porösen Trägers giesst, während des Giessens einen Warmluftstrom über den Träger leitet, das Wasser verdampft, die Beschichtung trocknet, diese Schritte mindestens einmal wiederholt und die Membran mit einer wässrig-alkalischen Lösung behandelt.

13. Verfahren zur Herstellung einer semipermeablen Kompositmembran nach Anspruch 2, dadurch gekennzeichnet, dass man

(I) eine wässrige Lösung, die PVA/PVA-Copolymere und einen auslaugbaren wasserlöslichen Zusatzstoff enthält, auf eine Oberfläche eines porösen Trägers giesst, gegebenenfalls den Film trocknet, ihn mit einer wässrigalkalischen Lösung behandelt, dann abspült und den Film mit den Komponenten (a), (b) und (c) umsetzt, oder

(II) eine wässrige Lösung, die PVA/PVA-Copolymere, ein Vernetzungsmittel (c") und gegebenenfalls einen auslaugbaren wasserlöslichen Zusatzstoff enthält, auf eine Oberfläche eines porösen Trägers giesst, gegebenenfalls den Film trocknet, diesen vernetzt und dann mit den Komponenten (a), (b) und (c) umsetzt, oder

(III) eine wässrige Giesslösung, die PVA/PVA-Copolymere und ein Vernetzungsmittel (c") mit mindestens zwei funktionellen Gruppen und gegebenenfalls ionisierbaren Gruppen enthält, auf eine oberfläche eines porösen Trägers giesst, während des Giessens eine Warmluftströmung über den Träger leitet und das Wasser verdampft, die Beschichtung (den Guss) dann trocknet, mit einer wässrig-alkalischen Lösung behandelt und dann mit Wasser abspült, sowie anschliessend den so erhaltenen dünnen Film mit den Komponenten (a), (b) und (c) weiter umsetzt.

14. Verwendung der semipermeablen Kompositmembranen nach einem der Ansprüche 1 bis 11 zur Abtrennung einwertiger Ionen niedrigen Ionengewichts von vorzugsweise mehrwertigen Ionen niedrigen oder hohen Ionengewichts oder von einwertigen Ionen hohen Ionengewichts.

15. Verwendung nach Anspruch 14, dadurch gekennzeichnet, das man organische Farbstoffe und Farbstoffmetallkomplexe von niedermolekularen anorganischen Salzen abtrennt.

16. Verwendung einer semipermeablen Kompositmembran nach einem der Ansprüche 1 bis 11 zur Abtrennung ionogener Substanzen von nichtionogenen Substanzen.

17. Verfahren zur Trennung/Konzentrierung von Substanzen, dadurch gekennzeichnet, dass man wässrige Lösungen von Substanzgemischen unter Druck über eine semipermeable Kompositmembran nach einem der Ansprüche 1 bis 11 leitet.

## Claims

1. Semipermeable composite membranes containing on one surface of a porous support a superficial, thin, semipermeable film of polymers on the basis of polyvinyl alcohol, wherein said film comprises at least two layers of polyvinyl alcohol (PVA)/polyvinyl alcohol copolymers (PVA-copolymers) modified by compounds containing at least two functional groups.

2. Semipermeable composite membranes containing on one surface of a porous support a superficial, thin semipermeable film, wherein said film comprises at least one layer of PVA/PVA-copolymers, which are optionally cross-linked with a cross-linking agent (c″) containing at least two functional groups and optionally ionisable groups, and the thin film is reacted with the components

(a) a monomeric organic compound containing at least two functional groups,

(b) a linear or branched polyfunctional oligomer or polymer, and

(c) a compound containing cross-linking and ionisable groups.

3. A composite membrane according to any one of claim 1 or 2, wherein the porous support is of polyolefines, polyacrylonitriles, polyamides, polysulfones or cellulosic materials.

4. A composite membrane according to claim 3, wherein the porous support is of polypropylene.

5. A composite membrane according to any one of claims 1 to 4, wherein the semipermeable film has a thickness of at least about 0.5 micron.

6. A composite membrane according to claim 1, wherein the PVA/PVA-copolymer is modified by reaction with an at least two reactive groups containing colourless or preferably coloured compound (c′) containing ionisable groups.

7. A composite membrane according to claim 2, wherein component (a) is a monomeric organic compound which contains, as reactive groups, multiple bonds or epoxide, aziridine, aldehyde, imidate, isocyanate, isothiocyanate, hydroxyl, anhydride, acyl halide or N-methylol groups, which are optionally substituted or (a) is a compound containing substituents which can be split off as tertiary amines or as anions.

8. A composite membrane according to claim 2, wherein component (b) is an oligomer or polymer which contains as functional groups aliphatic or atomatic amino groups, hydroxyl groups, thiol groups, isocyanate groups and/or thioisocyanate groups.

9. A composite membrane according to claim 2, wherein component (c) is a reactive colourless or preferably coloured compound containing at least one reactive group and ionisable groups.

10. A composite membrane according to claim 2, wherein the crosslinking agent (c″) is a colourless or preferably coloured, ionic compound containing at least two reactive groups, or a monomeric nonionic organic compound containing optionally substituted reactive multiple bonds or optionally substituted reactive epoxide, aziridine, aldehyde, imidate, isocyanate, isothiocyanate, hydroxyl, anhydride, acyl halide or N-methylol groups, or is a compound containing substituents which can be split off as tertiary amines or as anions.

11. A composite membrane according to any one of claism 1 to 10, wherein after modification the pore size is of 10 to 1 000 Å (1 to 100 nm).

12. A process for manufacturing a semipermeable composite membrane according to claim 1, which comprises casting on one surface of a porous support an aqueous casting solution containing PVA/PVA-copolymers and compounds containing at least two functional groups, passing a stream of warm air over the support during casting, evaporating the water, drying the coating, repeating said steps at least once, and treating the membrane in an aqueous alkaline solution.

13. A process for manufacturing a composite membrane according to claim 2, which comprises

(I) casting on one surface of a porous support an aqueous solution containing PVA/PVA-copolymers and a leachable water-soluble additive, optionally drying the obtained film, treating it in an aqueous alkaline solution and rinsing it and reacting the film with components (a), (b) and (c), or

(II) casting on one surface of a porous support an aqueous solution containing PVA/PVA-copolymers, a cross-linking agent (c″), and optionally a leachable water-soluble additive, optionally drying the film, cross-linking it and then reacting it with components (a), (b) and (c), or

(III) casting on one surface of a porous support an aqueous solution containing PVA/PVA-copolymers and a cross-linking agent (c″) containing at least two functional groups and optionally ionisable groups, passing a stream of warm air over the support during casting, evaporating the water, drying the coating, treating it in an aqueous alkaline solution and rinsing it and reacting the thin film with components (a), (b) and (c).

14. Use of the semipermeable composite membranes for separating monovalent ions of low ionic weight from preferably polyvalent ions of low or high ionic weight or from monovalent ions of high ionic weight.

15. Use according to claim 14 for separating organic dyestuffs and metal-complexes of dyestuffs from low low molecular inorganic salts.

16. Use of the semipermeable composite membrane according to any one of claims 1 to 11 for separating ionic substances from non-ionic substances.

17. A process for separating substances, which comprises directing aqueous solutions of mixtures of substances under pressure through a semipermeable composite membrane according to any one of claims 1 to 11.

**Revendications**

1. Membranes composites semi-perméables qui comprennent sur une surface d'un support poreux, un mince film semi-perméable formé de polymères à base d'alcool polyvinylique, caractérisées en ce que ce film consiste en au moins deux couches d'alcool polyvinylique (PVA)/copolymères d'alcool polyvinylique (PVA copolymères) qui sont modifiés au moyen d'un composé comprenant au moins deux radicaux fonctionnels.

2. Membranes composites semi-perméables qui comprennent sur une surface d'un support poreux un mince film semi-perméable, caractérisées en ce que ce film consiste en au moins une couche de PVA/PVA copolymères qui sont éventuellement réticulés à l'aide d'un agent de réticulation (c''), qui consiste en un composé contenant au moins deux radicaux fonctionnels et éventuellement des radicaux ionisables, et le film mince a été mis à réagir avec les composants :

(a) un composé organique monomère contenant au moins deux radicaux fonctionnels,

(b) un oligomère ou polymère polyfonctionnel linéaire ou ramifié, et

(c) un composé réticulant contenant des radicaux ionisables.

3. Membrane composite suivant la revendication 1 ou 2, caractérisée en ce que le support poreux consiste en polyoléfines, en polyacrylonitriles, en polyamides, en polysulfones ou en matières contenant de la cellulose.

4. Membrane composite suivant la revendication 3, caractérisée en ce que le support poreux consiste en polypropylène.

5. Membrane composite suivant l'une quelconque des revendications 1 à 4, caractérisée en ce que le film semi-perméable a une épaisseur d'au moins environ 0,5 µm.

6. Membrane composite suivant la revendication 1, caractérisée en ce que le PVA/PVA copolymère est modifié par réaction avec un composé (c') incolore ou de préférence coloré à radicaux ionisables contenant au moins deux radicaux réactifs.

7. Membrane composite suivant la revendication 2, caractérisée en ce que le composant (a) est un composé organique monomère qui contient des liaisons multiples réactives éventuellement substituées ou des radicaux époxyde, aziridine, aldéhyde, imidate, isocyanate, isothiocyanate, hydroxyle, anhydride, halogénure d'acyle ou N-méthylol, réactifs éventuellement substitués ou bien le composant (a) est un composé dont des amines tertiaires ou des anions peuvent être dégagés.

8. Membrane composite suivant la revendication 2, caractérisée en ce que le composant (b) est un oligomère ou polymère contenant comme radicaux fonctionnels des radicaux amino aliphatiques ou aromatiques, des radicaux hydroxyle, des radicaux thiol, des radicaux isocyanate et/ou des radicaux thiocyanate.

9. Membrane composite suivant la revendication 2, caractérisée en ce que le constituant (c) est un composé incolore ou de préférence coloré contenant au moins un radical réactif et des radicaux ionisables.

10. Membrane composite suivant la revendication 2, caractérisée en ce que l'agent de réticulation (c'') est un composé ionique incolore ou de préférence coloré qui contient au moins deux radicaux réactifs ou est un composé organique monomère non ionique qui contient des liaisons multiples réactives éventuellement substituées ou des radicaux époxyde, aziridine, aldéhyde, imidate, isocyanate, isothiocyanate, hydroxyle, anhydride, halogénure d'acide ou N-méthylol réactifs éventuellement substitués ou bien est un composé dont des amines tertiaires ou des anions peuvent être dégagés.

11. Membrane composite suivant l'une quelconque des revendications 1 à 10, caractérisée en ce que la grosseur des pores après la modification est de 10 à 100 Å (1 à 100 nm).

12. Procédé de fabrication d'une membrane composite semi-perméable suivant la revendication 1, caractérisé en ce qu'on coule une solution aqueuse de coulée qui contient des composés comprenant au moins deux groupements fonctionnels (réactifs) et des PVA/PVA copolymères sur une surface d'un support poreux, on fait passer pendant la coulée un courant d'air chaud sur le support, on évapore l'eau, on sèche le revêtement, on répète ces opérations au moins une fois et on traite la membrane à l'aide d'une solution aqueuse alcaline.

13. Procédé de fabrication d'une membrane composite semi-perméable suivant la revendication 2, caractérisé en ce que :

(I) on coule une solution aqueuse qui contient des PVA/PVA copolymères et un additif soluble dans

l'eau extractible sur une surface d'un support poreux, on sèche éventuellement le film, on le traite à l'aide d'une solution aqueuse alcaline, on le rince ensuite et on fait réagir le film avec les composants (a), (b) et (c), ou bien

(II) on coule une solution aqueuse qui contient des PVA/PVA copolymères, un agent de réticulation (c") et éventuellement un additif soluble dans l'eau extractible, sur une surface d'un support poreux, on sèche éventuellement le film, on le réticule et on le fait réagir ensuite avec les composants (a), (b) et (c), ou bien

(III) on coule une solution aqueuse de coulée qui contient des PVA/PVA copolymères et un agent de réticulation (c") comprenant au moins deux radicaux fonctionnels et éventuellement des radicaux ionisables sur une surface d'un support poreux, on fait passer pendant la coulée un courant d'air chaud sur le support et on évapore l'eau, on sèche le revêtement (coulée), on le traite au moyen d'une solution aqueuse alcaline, on le rince ensuite à l'eau, après quoi on fait réagir le film mince ainsi obtenu avec les composants (a), (b) et (c).

14. Utilisation des membranes composites semi-perméables suivant l'une quelconque des revendications 1 à 11 pour opérer la séparation des ions monovalents d'un poids ionique faible et des ions de préférence plurivalents d'un poids ionique faible ou élevé ou des ions univalents de poids ionique élevé.

15. Utilisation suivant la revendication 14, caractérisée en ce qu'on sépare des colorants organiques et complexes métalliques colorants et des sels inorganiques de bas poids moléculaire.

16. Utilisation d'une membrane composite semi-perméable suivant l'une quelconque des revendications 1 à 11 pour la séparation entre des substances ionogènes et des substances non ionogènes.

17. Procédé pour la séparation/concentration de substances, caractérisé en ce qu'on fait passer des solutions aqueuses de mélanges de substances sous pression sur une membrane composite semi-perméable suivant l'une quelconque des revendications 1 à 11.